# EUROPEAN PATENT APPLICATION

(11) **EP 4 571 374 A1**
(43) Date of publication of application: **18.06.2025**
(21) Application number: 23852217.1
(22) Date of filing: 30.05.2023
(51) Int. Cl.: G02B 6/02, G02B 6/38

(54) **MULTICORE FIBER, OPTICAL DEVICE, AND METHOD FOR MANUFACTURING MULTICORE FIBER**

(30) Priority: 08.08.2022 JP 2022126585
(71) Applicant: Fujikura Ltd., Tokyo 135-8512 (JP)
(72) Inventor: ODA, Takuya, Sakura-shi, Chiba 285-8550 (JP)
(74) Representative: Plasseraud IP
(86) International application number: PCT/JP2023/020030
(87) International publication number: WO 2024/034233

(57) **Abstract**

Provided is a multi-core-fiber enabling easy measurement of a marker position. In an end surface (σ1) of a multi-core-fiber (MF), cores (a1-an) are arranged in linearly symmetric manner to a virtual-axis (L1) orthogonal to inclination direction (v1) of the end surface (σ1). In the end surface (σ1), a marker (c) center is in an area between a straight-line passing through a first core or mode-field thereof and being parallel with the virtual-axis (L1) and a straight-line passing through a second core or mode-field thereof and being parallel with the virtual-axis (L1), where the first core is, among cores (a1,a4) in a first area, a core farthest from the virtual-axis (L1) and the second core is, among cores (a2,a3) in a second area, a core farthest from the virtual-axis (L1), the first and second areas being two areas into which the end surface (σ1) is virtually divided by the virtual-axis (L1).

## Description

### Technical Field

The present invention relates to a multi-core fiber or an optical device including a multi-core fiber.

### Background Art

In the field of optical communications, a multi-core fiber including a plurality of cores is widely used. A document disclosing the multi-core fiber is, for example, Patent Literature 1.

### Citation List

### [Patent Literature]

[Patent Literature 1]
Japanese Patent Application Publication, Tokukai, No. 2019-152866

### Summary of Invention

### Technical Problem

Optical fibers are often designed to have an end surface inclined such that the end surface is not orthogonal to an extending direction of cores, for the purpose of reducing reflection in the end surface. However, in a case where an end surface of a multi-core fiber in which a marker for identifying a core is formed inside a cladding is inclined, the following problem can occur, for example.

That is, in order to evaluate the quality of a multi-core fiber or in order to carry out rotation alignment of a multi-core fiber, positions of a plurality of cores and a marker of the multi-core fiber may sometimes be measured. This measurement is carried out by observing an end surface of the multi-core fiber with use of a microscope or the like. During this, it can be sometimes difficult to simultaneously focus on the plurality of cores and the marker, due to the inclination of the end surface. The reason for this is as follows. That is, in some measurement optical systems, an optical axis of an objective lens is set such that the optical axis matches a center axis of the multi-core fiber; in such a case, a lens surface of the objective lens and the end surface of the multi-core fiber do not directly confront each other. As a result, it can be difficult to measure the position of the marker.

An aspect of the present invention was made in view of the above problem, and has an object to provide a multi-core fiber which enables easy measurement of a position of a marker, an optical device including such a multi-core fiber, or a method for manufacturing such a multi-core fiber.

### Solution to Problem

A multi-core fiber in accordance with a first aspect of the present invention employs a configuration including: a cladding; a plurality of cores formed inside the cladding; at least one marker formed inside the cladding; and an end surface inclined so as not to be orthogonal to an extending direction of the plurality of cores, in the end surface, the plurality of cores being arranged in a linearly symmetric manner with respect to a virtual axis orthogonal to an inclination direction of the end surface, in the end surface, a center of the at least one marker being included in an area between (i) a straight line which passes through a first core or a mode field of the first core and which is in parallel with the virtual axis and (ii) a straight line which passes through a second core or a mode field of the second core and which is in parallel with the virtual axis, where the first core is, among cores provided in a first area out of the plurality of cores, a core farthest from the virtual axis and the second core is, among cores provided in a second area out of the plurality of cores, a core farthest from the virtual axis, the first area and the second area being two areas into which the end surface is virtually divided by the virtual axis.

### Advantageous Effects of Invention

In accordance with an aspect of the present invention, it is possible to provide a multi-core fiber which enables easy measurement of a position of a marker, an optical device including such a multi-core fiber, or a method for manufacturing such a multi-core fiber.

### Brief Description of Drawings

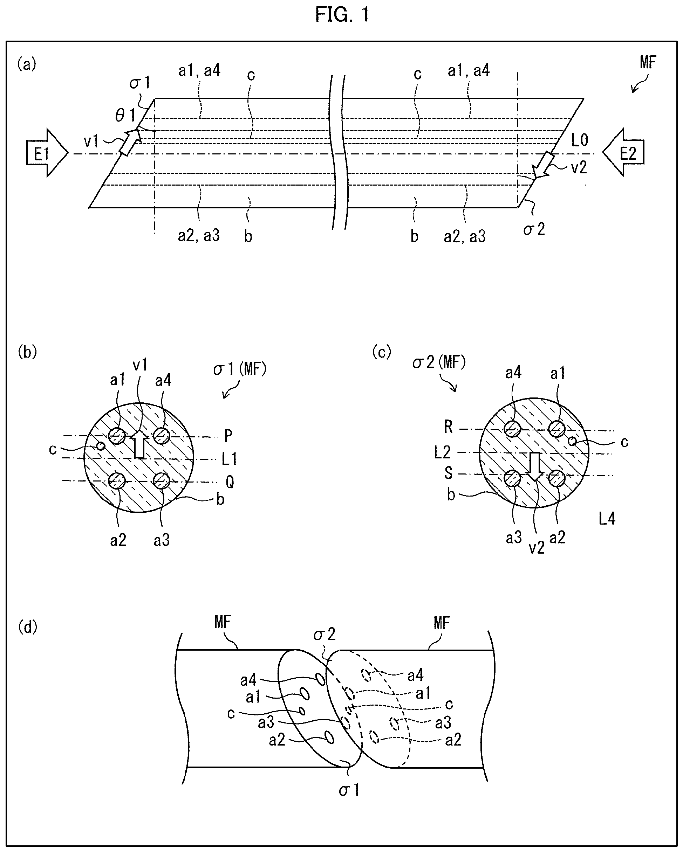

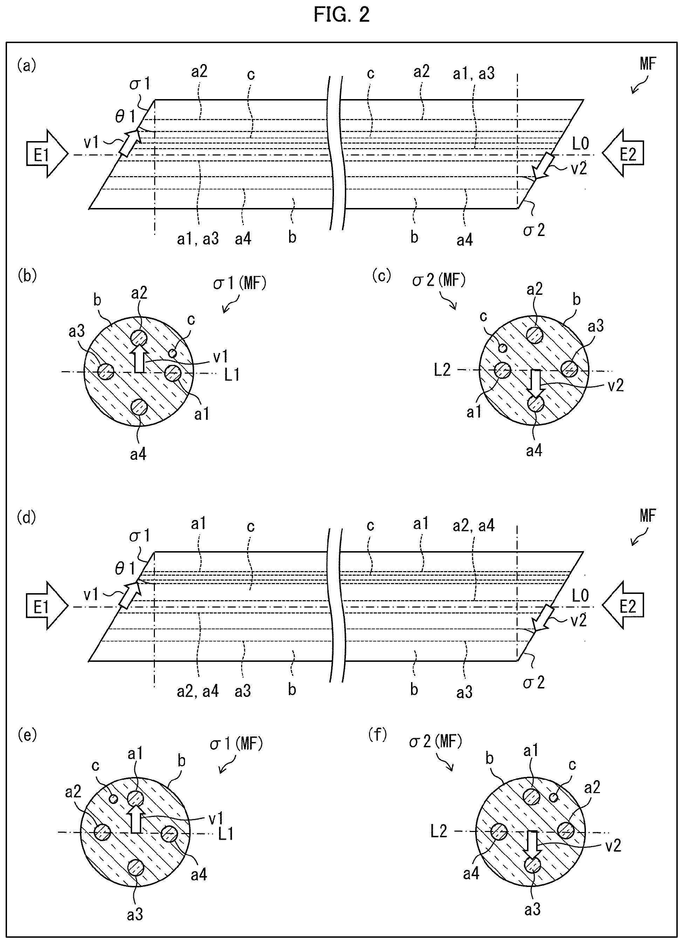

Fig. 1 is a view illustrating a configuration of a multi-core fiber in accordance with a first embodiment of the present invention. (a) is a side view of the multi-core fiber, (b) is a front view of one end surface of the multi-core fiber, (c) is a front view of the other end surface of the multi-core fiber, and (d) is a perspective view of the multi-core fiber.
(a) to (c) of Fig. 2 are views illustrating a first variation of the multi-core fiber shown in Fig. 1. (a) is a side view of the multi-core fiber, (b) is a front view of one end surface of the multi-core fiber, and (c) is a front view of the other end surface of the multi-core fiber. (d) to (f) of Fig. 2 are views illustrating a second variation of the multi-core fiber shown in Fig. 1. (d) is a side view of the multi-core fiber, (e) is a front view of one end surface of the multi-core fiber, and (f) is a front view of the other end surface of the multi-core fiber.

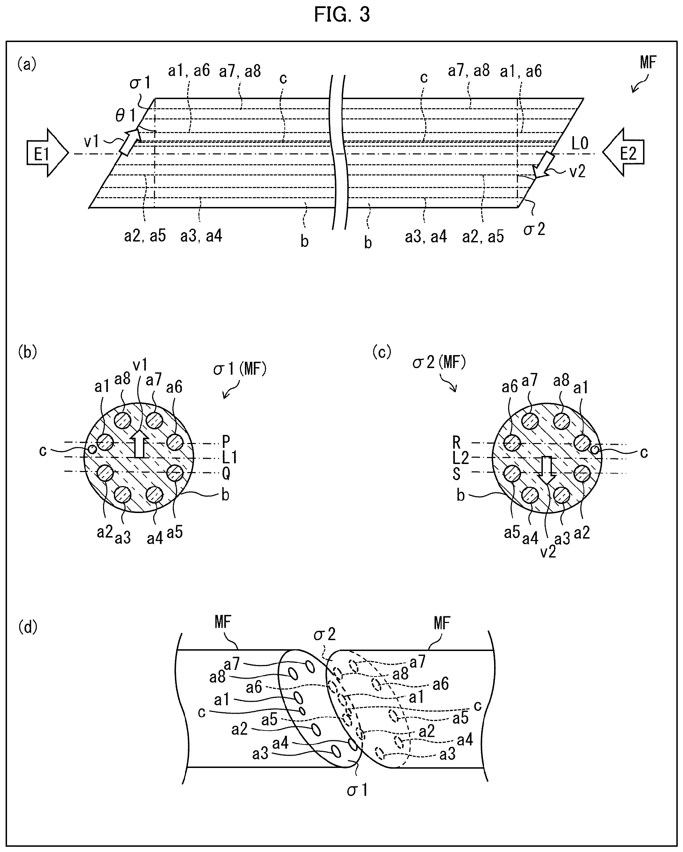

Fig. 3 is a view illustrating a configuration of a multi-core fiber in accordance with a second embodiment of the present invention. (a) is a side view of the multi-core fiber, (b) is a front view of one end surface of the multi-core fiber, (c) is a front view of the other end surface of the multi-core fiber, and (d) is a perspective view of the multi-core fiber.

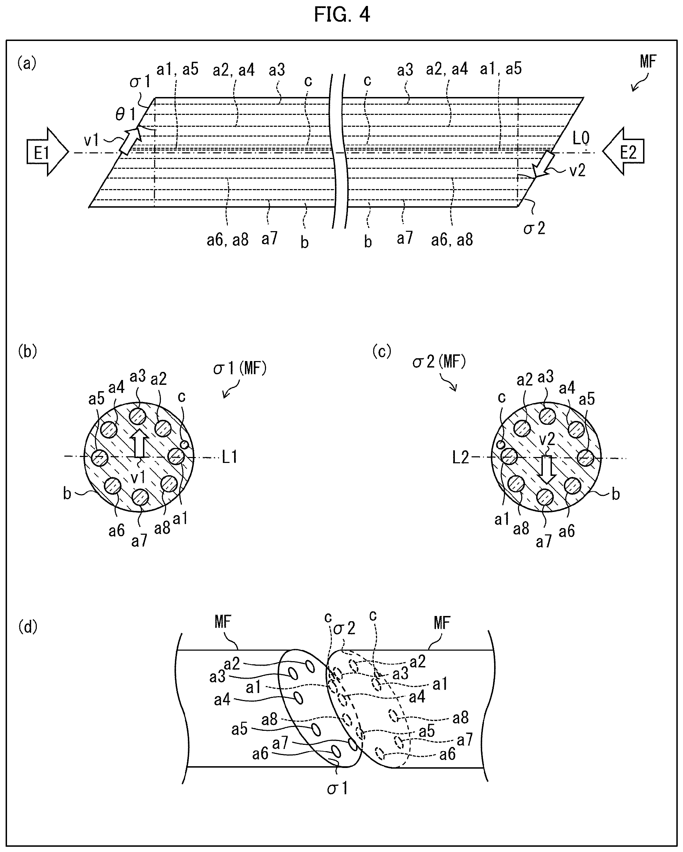

Fig. 4 is a view illustrating a variation of the multi-core fiber shown in Fig. 3. (a) is a side view of the multi-core fiber, (b) is a front view of one end surface of the multi-core fiber, (c) is a front view of the other end surface of the multi-core fiber, and (d) is a perspective view of the multi-core fiber.

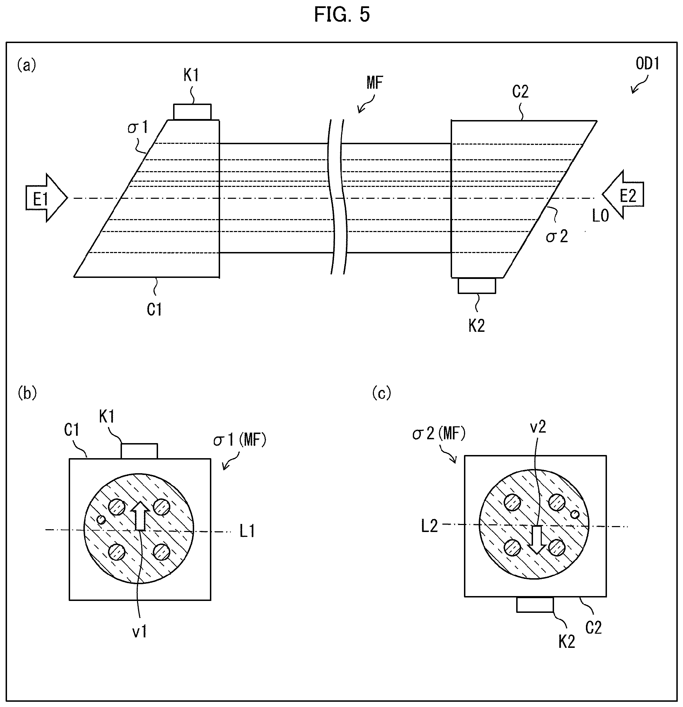

Fig. 5 is a view illustrating a configuration of an optical device in accordance with a third embodiment of the present invention. (a) is a side view of the optical device, (b) is a front view of one end surface of the optical device, and (c) is a front view of the other end surface of the optical device.

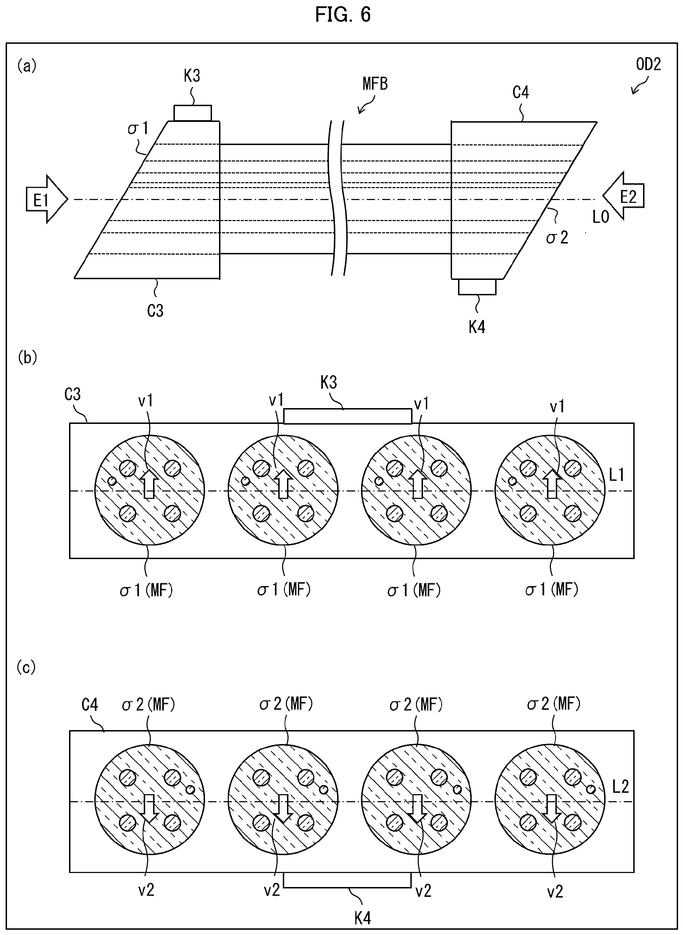

Fig. 6 is a view illustrating a configuration of an optical device in accordance with a fourth embodiment of the present invention. (a) is a side view of the optical device, (b) is a front view of one end surface of the optical device, and (c) is a front view of the other end surface of the optical device.

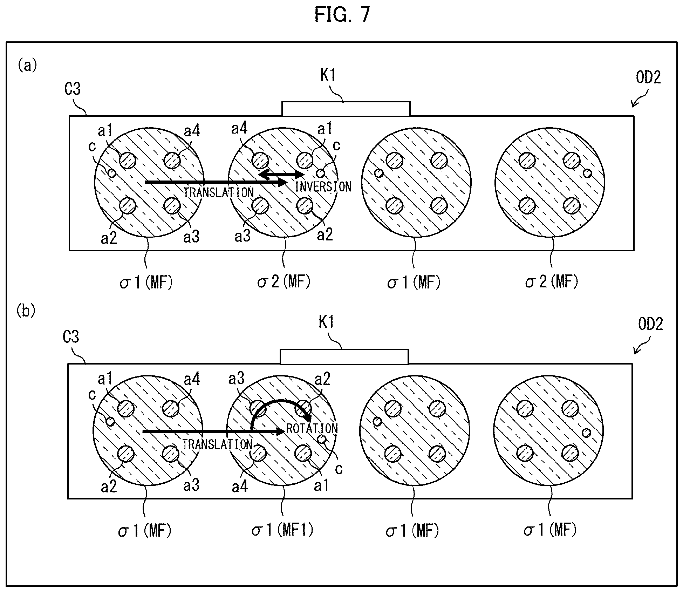

Fig. 7 is a view illustrating variations of the optical device shown in Fig. 6. (a) is a front view of one end surface of an optical device in accordance with a first variation, and (b) is a front view of one end surface of an optical device in accordance with a second variation.

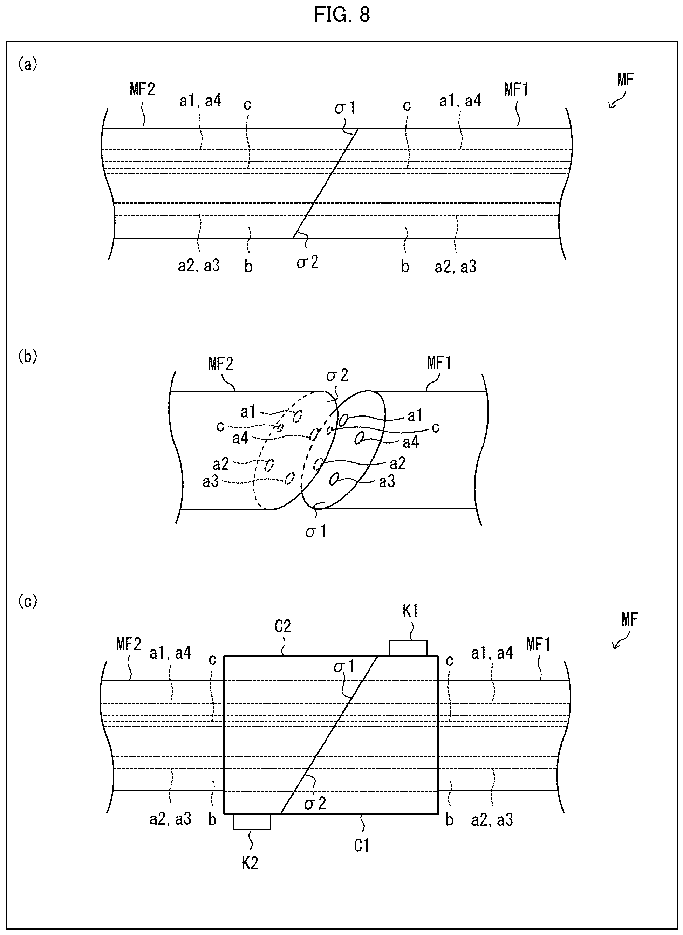

Fig. 8 is a view illustrating a configuration of a multi-core fiber in accordance with a fifth embodiment of the present invention. (a) is a side view of the multi-core fiber, (b) is a perspective view of the multi-core fiber, and (c) is a side view illustrating a variation of the multi-core fiber.

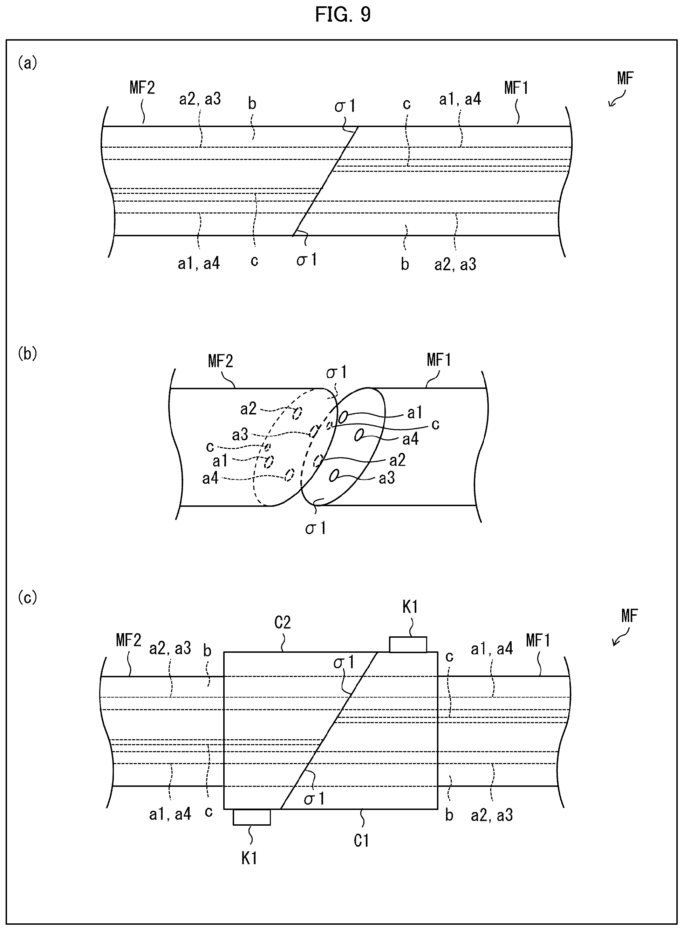

Fig. 9 is a view illustrating a configuration of a multi-core fiber in accordance with a sixth embodiment of the present invention. (a) is a side view of the multi-core fiber, (b) is a perspective view of the multi-core fiber, and (c) is a side view illustrating a variation of the multi-core fiber.

### Description of Embodiments

In order to evaluate the quality of a multi-core fiber or in order to carry out rotation alignment of a multi-core fiber, positions of a plurality of cores and a marker of the multi-core fiber may sometimes be measured. This measurement is carried out by observing an end surface of the multi-core fiber with use of a microscope or the like. During this, it is sometimes difficult to simultaneously focus on the plurality of cores and the marker, due to the inclination of the end surface. The reason for this is as follows. That is, in general measurement optical systems, an optical axis of an objective lens is set so that the optical axis matches a center axis of the multi-core fiber; therefore, a lens surface of the objective lens and the end surface of the multi-core fiber do not directly confront each other, and thus it is difficult to cover the plurality of cores and the marker within a range of a depth of field at once. Occurrence of such a problem can be avoided by adjusting the orientation of the measurement optical system or the multi-core fiber so that the lens surface of the objective lens and the end surface of the multi-core fiber directly confront each other. This, however, requires a mechanism for adjusting the orientation of the measurement optical system or the multi-core fiber, thereby causing another problem of increase in size and complexity of the observation device. Meanwhile, occurrence of the above problem can be avoided by focusing on the plurality of cores and the marker one by one in sequence. This, however, causes another problem of extension of the observation time.

The above-discussed difficulty in observation is remarkable particularly for the marker. The reason is that, in some cases, the marker is smaller in size than the cores, the marker is different in refractive index from the cores, and/or the marker is formed on an outer side than the cores, and thus a larger effect of defocus is given to the marker than to the cores. The later-described embodiments are proposed in consideration of such a problem, and have an object to provide a multi-core fiber which enables easy observation of the marker.

### [First Embodiment]

### (Configuration of Multi-Core Fiber)

The following will describe, with reference to Fig. 1, a configuration of a multi-core fiber MF in accordance with a first embodiment of the present invention. In Fig. 1, (a) is a side view of the multi-core fiber MF. (b) is a front view of one end surface (hereinafter, referred to as a "first end surface") σ1 of the multi-core fiber MF viewed in a direction of a sight line E1. (c) is a front view of the other end surface (hereinafter, referred to as a "second end surface") σ2 of the multi-core fiber MF viewed in a direction of a sight line E2. (d) is a perspective view of the multi-core fiber MF which is in a state where a first end surface σ1 and a second end surface σ2 abut on each other.

The multi-core fiber MF includes n cores a1 to an and a cladding b. Here, n is any natural number of not less than 2 (illustrated in Fig. 1 is a case where n = 4). The cladding b is a cylindrical member. The cladding b is made of silica glass, for example. Each core ai (i is a natural number of not less than 1 and not more than n) is a cylindrical area which is provided inside the cladding b, which has a refractive index higher than that of the cladding b, and which extends in a direction in which the cladding b extends. Each core ai is made of silica glass doped with an updopant such as germanium, for example. Note that the cladding b may have any shape, provided that the shape is a columnar shape. Further, the cladding b may have any cross-sectional shape. The cross-sectional shape of the cladding b may be a polygonal shape, such as a quadrangular shape or a hexagonal shape. Note that the multi-core fiber MF may further include an additional core(s) which is/are not the n cores a1 to an of interest in the present embodiment. For example, the multi-core fiber MF may include, as an additional core(s) which is/are not the n cores a1 to an of interest, a core provided in a center of the cladding b. The n cores a1 to an of interest are cores used for communication, for example. In this case, the n cores a1 to an of interest are preferably cores satisfying the standard defined by ITU-T. The additional core(s) which is/are not the n cores a1 to an of interest may be a core(s) used for communication or a core(s) (dummy core(s)) not used for communication. In the latter case, the additional core(s) which is/are not the n cores a1 to an of interest may be cores not satisfying the standard defined by ITU-T.

The multi-core fiber MF further includes a marker c for identifying core numbers 1 to n of the cores a1 to an. The marker c is a columnar area which is provided inside the cladding b, which has a different refractive index from that of the cladding b, and which extends in a direction in which the cladding b extends. The marker c may have any cross-sectional shape. The cross-sectional shape of the marker c may be a circular shape, a triangular shape, or a quadrangular shape, for example. The marker c is made of silica glass doped with a downdopant such as fluorine or boron, for example. In this case, the refractive index of the marker c is lower than that of the cladding b. Alternatively, the marker c is made of silica glass doped with an updopant such as germanium, aluminum, phosphor, or chlorine. In this case, the refractive index of the marker c is higher than that of the cladding b. The marker c may be formed by, for example, a drilling process or a stack-and-draw process. Generally, the marker c has an outer diameter smaller than an outer diameter of the core ai. Note that the marker c may be a hole. In this case, the refractive index of the marker c is lower than that of the cladding b. Further, the multi-core fiber MF may further include a marker which is not the marker c of interest in the present embodiment.

The core numbers 1 to n of the cores a1 to an can be identified on the basis of distances from the marker c. For example, in a case where the cores a1 to an are arranged on a circumference of a circle, the core numbers 1 to n of the cores a1 to an can be identified in the following manner. First, the core a1, which is closest to the marker c, is given a core number "1". Next, the core a2, which is second closest to the marker c, is given a core number "2". Then, when the circumference of the circle is traced so as to pass the core a1 and the core a2 in this order, the core a3 which is a third core to be traced is given a core number "3", the core a4 which is a fourth core to be traced is given a core number "4", ... the core an which is an n-th core to be traced is given a core number "n".
In the multi-core fiber MF, the first end surface σ1 is inclined so as not to be orthogonal to an extending direction of the cores a1 to an. Hereinafter, assuming that a flat plane orthogonal to the extending direction of the cores a1 to an is a horizontal plane, a direction in which a falling gradient of the first end surface σ1 becomes maximum will be referred to as an inclination direction v1 of the first end surface σ1 and a maximum value of the falling gradient of the first end surface σ1 will be referred to as an inclination angle θ1 of the first end surface σ1. The inclination angle θ1 of the first end surface σ1 is preferably not less than 2° and not more than 88°, more preferably not less than 4° and not more than 12°, even more preferably not less than 7° and not more than 9°, still more preferably not less than 7.8° and not more than 8.2°. The inclination angle θ1 of the first end surface σ1 is 8° or 6°, for example.

According to the multi-core fiber MF of the present embodiment, in the first end surface σ1, the cores a1 to an are arranged in a linearly symmetric manner (substantially linearly symmetrically) with respect to a virtual axis L1 orthogonal to the inclination direction v1. Here, the expression that the cores a1 to an are arranged in a linearly symmetric manner with respect to the virtual axis L1 means that, in a case where the first end surface σ1 is inverted with respect to the virtual axis L1, each of the cores a1 to an at least partially overlaps any of the cores a1 to an. As is clear from the description "in the first end surface σ1" at the beginning of this paragraph, the virtual axis L1 is a straight line in the first end surface σ1. In the present embodiment, the virtual axis L1 passes through a center of the first end surface σ1 (a center of the cladding). It is not essential that the virtual axis L1 pass through the center of the first end surface σ1, provided that the virtual axis L1 is orthogonal to the inclination direction v1.

With this, for two multi-core fibers MF, in a case where a first end surface σ1 of one multi-core fiber MF and a first end surface σ1 of the other multi-core fiber MF are connected to each other such that the two multi-core fibers MF are aligned in a single straight line as much as possible, cores a1 to an of these two multi-core fibers MF can be optically coupled to each other.

In the first end surface σ1, the cores a1 to an are more preferably arranged linearly symmetrically (completely linearly symmetrically) with respect to the virtual axis L1 orthogonal to the inclination direction v1. Here, the expression that the cores a1 to an are arranged linearly symmetrically with respect to the virtual axis L1 means that, in a case where the first end surface σ1 is inverted with respect to the virtual axis L1, each of the cores a1 to an overlaps any of the cores a1 to an without excess or deficiency.

With this, for two multi-core fibers MF, in a case where a first end surface σ1 of one multi-core fiber MF and a first end surface σ1 of the other multi-core fiber MF are connected to each other such that the two multi-core fibers MF are aligned in a single straight line as much as possible, the efficiency of coupling the cores a1 to an of these two multi-core fibers MF can be further improved.

Further, according to the multi-core fiber MF in accordance with the present embodiment, in the first end surface σ1, the above-described virtual axis L1 does not cross any of the cores a1 to an.

Thus, for two multi-core fibers MF, in a case where a first end surface σ1 of one multi-core fiber MF and a first end surface σ1 of the other multi-core fiber MF are connected to each other such that the two multi-core fibers MF are aligned in a single straight line as much as possible, cores having different core numbers are connected to each other. In the example shown in Fig. 1, the core a1 of the one multi-core fiber MF is connected to the core a2 of the other multi-core fiber MF, and the core a3 of the one multi-core fiber MF is connected to the core a4 of the other multi-core fiber MF.

A first point to be specially mentioned regarding the multi-core fiber MF in accordance with the present embodiment is that, in the first end surface σ1, the core a1 closest to the marker c and the core a2 second closest to the marker c are arranged so as to sandwich the virtual axis L1 therebetween. Thus, the marker c is disposed near the virtual axis L1. This makes it easy to observe the marker c together with the cores a1 to an, in a case where the first end surface σ1 of the multi-core fiber MF is observed from the front with use of a microscope or the like. This is because that, in a case where a focus of an objective lens is set on the virtual axis L1 or a position near the virtual axis L1 in order to reduce a difference in the degree of defocus particularly in the inclination direction of the cores a1 to an, the above arrangement can reduce defocus of the marker c.

Particularly, the multi-core fiber MF shown in Fig. 1 is configured such that, in the first end surface σ1, the marker c is disposed in an area sandwiched between (i) a straight line P which passes through a center of the core a1 closest to the marker c and which is in parallel with the virtual axis L1 and (ii) a straight line Q which passes through a center of the core a2 second closest to the marker c and which is in parallel with the virtual axis L1. Thus, the marker c is disposed even nearer the virtual axis L1. This makes it even easier to observe the marker c together with the cores a1 to an, in a case where the first end surface σ1 of the multi-core fiber MF is observed from the front with use of a microscope or the like. This is because that, in a case where the focus of the objective lens is set on the virtual axis L1 or a position near the virtual axis L1 in order to reduce a difference particularly in the degree of defocus in the inclination direction of the cores a1 to an, the above arrangement can further reduce defocus of the marker c.

In the multi-core fiber MF, the second end surface σ2 is inclined so as not to be orthogonal to an extending direction of the cores a1 to an. Hereinafter, assuming that a flat plane orthogonal to the extending direction of the cores a1 to an is a horizontal plane, a direction in which a falling gradient of the second end surface σ2 becomes maximum will be referred to as an inclination direction v2 of the second end surface σ2 and a maximum value of the falling gradient of the second end surface σ2 will be referred to as an inclination angle θ2 of the second end surface σ2. The inclination angle θ2 of the second end surface σ2 is preferably not less than 2° and not more than 88°, more preferably not less than 4° and not more than 12°, even more preferably not less than 7° and not more than 9°, still more preferably not less than 7.8° and not more than 8.2°. The inclination angle θ2 of the second end surface σ2 is 8° or 6°, for example.

The multi-core fiber MF in accordance with the present embodiment is configured such that, in the second end surface σ2, the cores a1 to an are arranged in a linearly symmetric manner (substantially linearly symmetrically) with respect to a virtual axis L2 orthogonal to the inclination direction v2. Here, the expression that the cores a1 to an are arranged in a linearly symmetric manner with respect to the virtual axis L2 means that, in a case where the second end surface σ2 is inverted with respect to the virtual axis L2, each of the cores a1 to an at least partially overlaps any of the cores a1 to an. As is clear from the description "in the second end surface σ2" at the beginning of this paragraph, the virtual axis L2 is a straight line in the second end surface σ2. In the present embodiment, the virtual axis L2 passes through a center of the second end surface σ2 (a center of the cladding). It is not essential that the virtual axis L2 pass through the center of the second end surface σ2, provided that the virtual axis L2 is orthogonal to the inclination direction v2.

With this, for two multi-core fibers MF, in a case where a second end surface σ2 of one multi-core fiber MF and a second end surface σ2 of the other multi-core fiber MF are connected to each other such that the two multi-core fibers MF are aligned in a single straight line as much as possible, cores a1 to an of these two multi-core fibers MF can be optically coupled to each other.

In the second end surface σ2, the cores a1 to an are more preferably arranged linearly symmetrically (completely linearly symmetrically) with respect to the virtual axis L2 orthogonal to the inclination direction v2. Here, the expression that the cores a1 to an are arranged linearly symmetrically with respect to the virtual axis L2 means that, in a case where the second end surface σ2 is inverted with respect to the virtual axis L2, each of the cores a1 to an overlaps any of the cores a1 to an without excess or deficiency.

With this, for two multi-core fibers MF, in a case where a second end surface σ2 of one multi-core fiber MF and a second end surface σ2 of the other multi-core fiber MF are connected to each other such that the two multi-core fibers MF are aligned in a single straight line as much as possible, the efficiency of coupling the cores a1 to an of these two multi-core fibers MF can be further improved.

Further, the multi-core fiber MF in accordance with the present embodiment is configured such that, in the second end surface σ2, the above-described virtual axis L2 does not cross any of the cores a1 to an.

Thus, for two multi-core fibers MF, in a case where a second end surface σ2 of one multi-core fiber MF and a second end surface σ2 of the other multi-core fiber MF are connected to each other such that the two multi-core fibers MF are aligned in a single straight line as much as possible, cores having different core numbers are connected to each other. In the example shown in Fig. 1, the core a1 of the one multi-core fiber MF is connected to the core a2 of the other multi-core fiber MF, and the core a3 of the one multi-core fiber MF is connected to the core a4 of the other multi-core fiber MF.

A second point to be specially mentioned regarding the multi-core fiber MF in accordance with the present embodiment is that, in the second end surface σ2, the core a1 closest to the marker c and the core a2 second closest to the marker c are arranged so as to sandwich the virtual axis L2 therebetween. Thus, the marker c is disposed near the virtual axis L2. This makes it easy to observe the marker c together with the cores a1 to an, in a case where the second end surface σ2 of the multi-core fiber MF is observed from the front with use of a microscope or the like. This is because that, in a case where a focus of an objective lens is set on the virtual axis L2 or a position near the virtual axis L2 in order to reduce a difference in the degree of defocus particularly in the inclination direction of the cores a1 to an, the above arrangement can reduce defocus of the marker c.

Particularly, the multi-core fiber MF shown in Fig. 1 is configured such that, in the second end surface σ2, the marker c is disposed in an area sandwiched between (i) a straight line R which passes through a center of the core a1 closest to the marker c and which is in parallel with the virtual axis L2 and (ii) a straight line S which passes through a center of the core a2 second closest to the marker c and which is in parallel with the virtual axis L2. Thus, the marker c is disposed even nearer the virtual axis L2. This makes it even easier to observe the marker c together with the cores a1 to an, in a case where the second end surface σ2 of the multi-core fiber MF is observed from the front with use of a microscope or the like. This is because that, in a case where a focus of an objective lens is set on the virtual axis L2 or a position near the virtual axis L2 in order to reduce a difference in the degree of defocus particularly in the inclination direction of the cores a1 to an, the above arrangement can further reduce defocus of the marker c.

In the multi-core fiber MF in accordance with the present embodiment, the inclination direction v1 of the first end surface σ1 and the inclination direction v2 of the second end surface σ2 are defined so as to satisfy the following condition 1.

Condition 1: In a case where the first end surface σ1 and the second end surface σ2 are brought into surface contact with each other so as to minimize an angle made by the extending direction of the cores a1 to an in the first end surface σ1 and the extending direction of the cores a1 to an in the second end surface σ2, each of the cores a1 to an in the first end surface σ1 at least partially overlaps any of the cores a1 to an in the second end surface σ2.

Note that the aspect in which two cores at least partially overlap each other encompasses an aspect in which only a part of one core overlaps only a part of the other core, an aspect in which only a part of one core overlaps the whole of the other core, and an aspect in which the whole of one core overlaps the whole of the other core (i.e., an aspect in which the two cores overlap each other without excess or deficiency).

Thus, for two multi-core fibers MF, in a case where a first end surface σ1 of one multi-core fiber MF and a second end surface σ2 of the other multi-core fiber MF are connected to each other such that the two multi-core fibers MF are aligned in a single straight line as much as possible, cores a1 to an of these two multi-core fibers MF can be optically coupled to each other. Here, the expression that the first end surface σ1 and the second end surface σ2 are connected to each other "such that the two multi-core fibers MF are aligned in a single straight line as much as possible" means that the first end surface σ1 and the second end surface σ2 are connected to each other "so as to minimize an angle made by an extending direction of the cores a1 to an in one multi-core fiber MF and an extending direction of the cores a1 to an in the other multi-core fiber".

Note that the inclination angle θ1 of the first end surface σ1 and the inclination angle θ2 of the second end surface σ2 may or may not be equal to each other. The inclination angle θ1 of the first end surface σ1 and the inclination angle θ2 of the second end surface σ2 are preferably equivalent to each other (substantially equal to each other), more preferably equal to each other (completely equal to each other). Here, the expression that the inclination angle θ1 of the first end surface σ1 and the inclination angle θ2 of the second end surface σ2 are equivalent to each other (substantially equal to each other) means, for example, that a difference |θ1-θ2| is not more than 2° or not more than 0.4°.

In a case where the inclination angle θ1 of the first end surface σ1 and the inclination angle θ2 of the second end surface σ2 are equal to each other, a minimum value of an angle made by the extending direction of the cores a1 to an in the first end surface σ1 and the extending direction of the cores a1 to an in the second end surface σ2 is 0°. That is, minimizing the angle made by the extending direction of the cores a1 to an in the first end surface σ1 and the extending direction of the cores a1 to an in the second end surface σ2 is equivalent to making the extending direction of the cores a1 to an in the first end surface σ1 and the extending direction of the cores a1 to an in the second end surface σ2 coincide with each other. Therefore, the above condition 1 is equivalent to the following condition 1'.

Condition 1': In a case where the first end surface σ1 and the second end surface σ2 are brought into surface contact with each other so as to make the extending direction of the cores a1 to an in the first end surface σ1 and the extending direction of the cores a1 to an in the second end surface σ2 coincide with each other, each of the cores a1 to an in the first end surface σ1 at least partially overlaps any of the cores a1 to an in the second end surface σ2.

Thus, for two multi-core fibers MF, in a case where a first end surface σ1 of one multi-core fiber MF and a second end surface σ2 of the other multi-core fiber MF are connected to each other such that the two multi-core fibers MF are aligned in a single straight line, cores a1 to an of these two multi-core fibers MF can be optically coupled to each other. Here, the expression that the first end surface σ1 and the second end surface σ2 are connected to each other such that "the two multi-core fibers MF are arranged in a single straight line" means that the first end surface σ1 and the second end surface σ2 are connected to each other such that "an extending direction of the cores a1 to an of the one multi-core fiber MF and an extending direction of the cores a1 to an of the other multi-core fiber MF coincide with each other". Even if the inclination angle θ1 of the first end surface σ1 and the inclination angle θ2 of the second end surface σ2 are not precisely equal to each other, it is possible to achieve a similar effect, provided that the inclination angle θ1 of the first end surface σ1 and the inclination angle θ2 of the second end surface σ2 are equivalent to each other (substantially equal to each other).

According to the multi-core fiber MF of the present embodiment, it is defined that projections of the inclination direction v1 of the first end surface σ1 and the inclination direction v2 of the second end surface σ2 onto a flat plane orthogonal to an optical axis L0 extend in opposite directions. Thus, the multi-core fiber MF of the present embodiment satisfies, in addition to the above condition 1, the following condition 2.

Condition 2: In a case where the first end surface σ1 and the second end surface σ2 are brought into surface contact with each other so as to minimize the angle made by the extending direction of the cores a1 to an in the first end surface σ1 and the extending direction of the cores a1 to an in the second end surface σ2, cores which at least partially overlap each other have the same core number.

In the example shown in Fig. 1, pairs of cores which at least partially overlap each other are (1) a pair of the core a1 in the first end surface σ1 and the core a1 in the second end surface σ2, (2) a pair of the core a2 in the first end surface σ1 and the core a2 in the second end surface σ2, (3) a pair of the core a3 in the first end surface σ1 and the core a3 in the second end surface σ2, and (4) a pair of the core a4 in the first end surface σ1 and the core a4 in the second end surface σ2. Also in any of the four pairs, two cores constituting the pair have the same core number.

With this, for two multi-core fibers MF, in a case where a first end surface σ1 of one multi-core fiber MF and a second end surface σ2 of the other multi-core fiber MF are connected to each other such that the two multi-core fibers MF are aligned in a single straight line as much as possible, cores having the same core number can be optically coupled to each other.

In the multi-core fiber MF, the inclination direction v1 of the first end surface σ1 and the inclination direction v2 of the second end surface σ2 may not satisfy the above-described relation. For example, the inclination direction v1 of the first end surface σ1 and the inclination direction v2 of the second end surface σ2 may be defined so that projections thereof with respect to a flat plane orthogonal to an optical axis L0 extend in opposite directions or projections thereof with respect to the flat plane orthogonal to the optical axis L0 extend so as to be orthogonal to each other. In this case, the multi-core fiber MF in accordance with the present embodiment satisfies, instead of the above condition 2, the following core 3.

Condition 3: In a case where the first end surface σ1 and the second end surface σ2 are brought into surface contact with each other so as to minimize the angle made by the extending direction of the cores a1 to an in the first end surface σ1 and the extending direction of the cores a1 to an in the second end surface σ2, cores which at least partially overlap each other have different core numbers.

In the multi-core fiber MF, only one of the first end surface σ1 and the second end surface σ2 may be inclined. For example, in a case where the first end surface σ1 is inclined in the above-described manner, the second end surface σ2 may or may not be inclined. For another example, in a case where the second end surface σ2 is inclined in the above-described manner, the first end surface σ1 may or may not be inclined.

### (Variations of Multi-Core Fiber)

The following will describe, with reference to Fig. 2, two variations of the multi-core fiber MF. In Fig. 2, (a) is a side view of a multi-core fiber MF in accordance with a first variation. (b) is a front view of one end surface (hereinafter, referred to as a "first end surface") σ1 of the multi-core fiber MF in accordance with the first variation, viewed in a direction of a sight line E1. (c) is a front view of the other end surface (hereinafter, referred to as a "second end surface") σ2 of the multi-core fiber MF in accordance with the first variation, viewed in a direction of a sight line E2. (d) is a side view of a multi-core fiber in accordance with a second variation. (e) is a front view of one end surface (hereinafter, referred to as a "first end surface") σ1 of the multi-core fiber MF in accordance with the second variation, viewed in a direction of a sight line E1. (f) is a front view of the other end surface (hereinafter, referred to as a "second end surface") σ2 of the multi-core fiber MF in accordance with the second variation, viewed in a direction of a sight line E2.

The multi-core fiber MF shown in Fig. 1 is configured such that (1) in the first end surface σ1, the core a1 closest to the marker c and the core a2 second closest to the marker c are disposed so as to sandwich the virtual axis L1 therebetween and (2) in the second end surface σ2, the core a1 closest to the marker c and the core a2 second closest to the marker c are disposed so as to sandwich the virtual axis L2 therebetween. In contrast, the multi-core fiber MF in accordance with the first variation shown in (a) to (c) of Fig. 2 is configured such that (1) in the first end surface σ1, the core a1 closest to the marker c is disposed on the virtual axis L1 and (2) in the second end surface σ2, the core a1 closest to the marker c is disposed on the virtual axis L2.

Thus, in the first end surface σ1, the marker c is disposed near the virtual axis L1. This makes it easy to observe the marker c together with the cores a1 to an, in a case where the first end surface σ1 of the multi-core fiber MF is observed from the front with use of a microscope or the like. Further, in the second end surface σ2, the marker c is disposed near the virtual axis L2. This makes it easy to observe the marker c together with the cores a1 to an, in a case where the second end surface σ2 of the multi-core fiber MF is observed from the front with use of a microscope or the like.

The multi-core fiber MF shown in Fig. 1 is configured such that (1) in the first end surface σ1, the core a1 closest to the marker c and the core a2 second closest to the marker c are disposed so as to sandwich the virtual axis L1 therebetween and (2) in the second end surface σ2, the core a1 closest to the marker c and the core a2 second closest to the marker c are disposed so as to sandwich the virtual axis L2 therebetween. In contrast, the multi-core fiber MF in accordance with the second variation shown in (d) to (f) of Fig. 2 is configured such that (1) in the first end surface σ1, the core a2 second closest to the marker c is disposed on the virtual axis L1 and (2) in the second end surface σ2, the core a2 second closest to the marker c is disposed on the virtual axis L2.

Thus, in the first end surface σ1, the marker c is disposed near the virtual axis L1. This makes it easy to observe the marker c together with the cores a1 to an, in a case where the first end surface σ1 of the multi-core fiber MF is observed from the front with use of a microscope or the like. Further, in the second end surface σ2, the marker c is disposed near the virtual axis L2. This makes it easy to observe the marker c together with the cores a1 to an, in a case where the second end surface σ2 of the multi-core fiber MF is observed from the front with use of a microscope or the like.

### (Common Feature)

As a common feature, the multi-core fibers MF shown in Figs. 1 and 2 have the following feature: "In each of the first end surface σ1 and the second end surface σ2, a center of the marker c is included in an area between the virtual axis L1 and a straight line which passes through a center of, among the cores a1 to an, a core farthest from the virtual axis L1 and which is in parallel with the virtual axis L1". Thus, as compared to a configuration in which the marker c is not included in the above area, the above configuration makes it easier to observe the marker c together with the cores a1 to an when the second end surface σ2 of the multi-core fiber MF is observed from the front with use of a microscope or the like. Multi-core fibers MF shown in Figs. 3 and 4 (described later) also have this feature. This point will be described in more detail.

First, the first end surface σ1 of the multi-core fiber MF shown in Fig. 1 can be explained as below. Assume that the first end surface σ1 is divided, by the virtual axis L1, into two areas, that is, a first area (an area above the virtual axis L1 when seen in Fig. 1) and a second area (an area below the virtual axis L1 when seen in Fig. 1). Among the cores a1 and a4 provided in the first area, a core(s) farthest from the virtual axis L1 is/are the cores a1 and a4. Meanwhile, among the cores a2 and a3 provided in the second area, a core(s) farthest from the virtual axis L1 is/are the cores a2 and a3. In this state, the marker c is provided in an area sandwiched between (i) a straight line (coinciding with the above-described straight line P in Fig. 1) which passes through the cores a1 and a4 and which is in parallel with the virtual axis L1 and (ii) a straight line (coinciding with the above-described straight line Q in Fig. 1) which passes through the cores a2 and a3 and which is in parallel with the virtual axis L1. Thus, it can be said that the marker c is formed in an area sandwiched between (i) the straight line which passes through, among the cores a1 and a4 provided in the first area, the cores a1 and a4 farthest from the virtual axis L1 and which is in parallel with the virtual axis L1 and (ii) the straight line which passes through, among the cores a2 and a3 provided in the second area, the cores a2 and a3 farthest from the virtual axis L1 and which is in parallel with the virtual axis L1. Note that the straight line which passes through the cores a1 and a4 and which is in parallel with the virtual axis L1 may be (1) a straight line which passes through, among points included in the cores a1 and a4, a point closest to the virtual axis L1, (2) a straight line which passes through centers of the cores a1 and a4, or (3) a straight line which passes through, among points included in the cores a1 and a4, a point farthest from the virtual axis L1. Similarly, the straight line which passes through the cores a2 and a3 and which is in parallel with the virtual axis L1 may be (1) a straight line which passes through, among points included in the cores a2 and a3, a point closest to the virtual axis L1, (2) a straight line which passes through centers of the cores a2 and a3, or (3) a straight line which passes through, among points included in the cores a2 and a3, a point farthest from the virtual axis L1. This also applies to the second end surface σ2 of the multi-core fiber MF shown in Fig. 1.

Further, the first end surface σ1 of the multi-core fiber MF shown in (a) to (c) of Fig. 2 can be explained as below. Assume that the first end surface σ1 is divided, by the virtual axis L1, into two areas, that is, a first area (an area above the virtual axis L1 when seen in Fig. 2) and a second area (an area below the virtual axis L1 when seen in Fig. 2). Among the cores a1, a2, and a3 provided in the first area, a core farthest from the virtual axis L1 is the core a2. Meanwhile, among the cores a3, a4, and a1 provided in the second area, a core farthest from the virtual axis L1 is the core a4. In this state, the marker c is provided in an area sandwiched between (i) a straight line which passes through the core a2 and which is in parallel with the virtual axis L1 and (ii) a straight line which passes through the core a4 and which is in parallel with the virtual axis L1. Thus, it can be said that the marker c is formed in an area sandwiched between (i) the straight line which passes through, among the cores a1, a2, and a3 provided in the first area, the core a2 farthest from the virtual axis L1 and which is in parallel with the virtual axis L1 and (ii) the straight line which passes through, among the cores a3, a4, and a1 provided in the second area, the core a4 farthest from the virtual axis L1 and which is in parallel with the virtual axis L1. Note that the straight line which passes through the core a2 and which is in parallel with the virtual axis L1 may be (1) a straight line which passes through, among points included in the core a2, a point closest to the virtual axis L1, (2) a straight line which passes through a center of the core a2, or (3) a straight line which passes through, among points included in the core a2, a point farthest from the virtual axis L1. Similarly, the straight line which passes through the core a4 and which is in parallel with the virtual axis L1 may be (1) a straight line which passes through, among points included in the core a4, a point closest to the virtual axis L1, (2) a straight line which passes through a center of the core a4, or (3) a straight line which passes through, among points included in the core a4, a point farthest from the virtual axis L1. This also applies to the second end surface σ2 of the multi-core fiber MF shown in (a) to (c) of Fig. 2.

Further, the first end surface σ1 of the multi-core fiber MF shown in (d) to (f) of Fig. 2 can be explained as below. Assume that the first end surface σ1 is divided, by the virtual axis L1, into two areas, that is, a first area (an area above the virtual axis L1 when seen in Fig. 2) and a second area (an area below the virtual axis L1 when seen in Fig. 2). Among the cores a4, a1, and a2 provided in the first area, a core farthest from the virtual axis L1 is the core a1. Meanwhile, among the cores a2, a3, and a4 provided in the second area, a core farthest from the virtual axis L1 is the core a3. In this state, the marker c is provided in an area sandwiched between (i) a straight line which passes through the core a1 and which is in parallel with the virtual axis L1 and (ii) a straight line which passes through the core a3 and which is in parallel with the virtual axis L1. Thus, it can be said that the marker c is formed in an area sandwiched between (i) the straight line which passes through, among the cores a4, a1, and a2 provided in the first area, the core a1 farthest from the virtual axis L1 and which is in parallel with the virtual axis L1 and (ii) the straight line which passes through, among the cores a2, a3, and a4 provided in the second area, the core a3 farthest from the virtual axis L1 and which is in parallel with the virtual axis L1. Note that the straight line which passes through the core a1 and which is in parallel with the virtual axis L1 may be (1) a straight line which passes through, among points included in the core a1, a point closest to the virtual axis L1, (2) a straight line which passes through a center of the core a1, or (3) a straight line which passes through, among points included in the core a1, a point farthest from the virtual axis L1. Similarly, the straight line which passes through the core a3 and which is in parallel with the virtual axis L1 may be (1) a straight line which passes through, among points included in the core a3, a point closest to the virtual axis L1, (2) a straight line which passes through a center of the core a3, or (3) a straight line which passes through, among points included in the core a3, a point farthest from the virtual axis L1. This also applies to the second end surface σ2 of the multi-core fiber MF shown in (d) to (f) of Fig. 2.

As discussed above, it can be said that the multi-core fiber MF in accordance with the present embodiment has the following features 1 and 2.

Feature 1: In a case where the first end surface σ1 is divided into two areas, that is, the first area and the second area by the virtual axis L1, the marker c is formed in an area sandwiched between (i) a straight line which passes through, among a core(s) provided in the first area out of the cores a1 to an, a core farthest from the virtual axis L1 and which is in parallel with the virtual axis L1 and (ii) a straight line which passes through, among a core(s) provided in the second area out of the cores a1 to an, a core farthest from the virtual axis L1 and which is in parallel with the virtual axis L1.

Feature 2: In a case where the second end surface σ2 is divided into two areas, that is, the first area and the second area by the virtual axis L1, the marker c is formed in an area sandwiched between (i) a straight line which passes through, among a core(s) provided in the first area out of the cores a1 to an, a core farthest from the virtual axis L1 and which is in parallel with the virtual axis L1 and (ii) a straight line which passes through, among a core(s) provided in the second area out of the cores a1 to an, a core farthest from the virtual axis L1 and which is in parallel with the virtual axis L1.

Instead of the above-described features 1 and 2, the below-described features 1' and 2' may be employed to achieve a bit larger range in which the marker c can be formed. In such a configuration, similar effects to those of the configuration having the above-described features 1 and 2 can be expected. A "mode field" of a core in the below-described features 1' and 2' refers to, with regard to an intensity distribution of light of a normal mode propagating through the core at an operation wavelength, an area on which 86.5% of photocurrent is concentrated.

Feature 1': In a case where the first end surface σ1 is divided into two areas, that is, the first area and the second area by the virtual axis L1, the marker c is formed in an area sandwiched between (i) a straight line which passes through a mode field of, among a core(s) provided in the first area core out of the cores a1 to an, a core farthest from the virtual axis L1 and which is in parallel with the virtual axis L1 and (ii) a straight line which passes through a mode field of, among a core(s) provided in the second area out of the cores a1 to an, a core farthest from the virtual axis L1 and which is in parallel with the virtual axis L1.

Feature 2': In a case where the second end surface σ2 is divided into two areas, that is, the first area and the second area by the virtual axis L1, the marker c is formed in an area sandwiched between (i) a straight line which passes through a mode field of, among a core(s) provided in the first area out of the cores a1 to an, a core farthest from the virtual axis L1 and which is in parallel with the virtual axis L1 and (ii) a straight line which passes through a mode field of, among a core(s) provided in the second area out of the cores a1 to an, a core farthest from the virtual axis L1 and which is in parallel with the virtual axis L1.

### [Second Embodiment]

### (Configuration of Multi-Core Fiber)

The following will describe, with reference to Fig. 3, a configuration of a multi-core fiber MF in accordance with a second embodiment of the present invention. In Fig. 3, (a) is a side view of the multi-core fiber MF. (b) is a front view of one end surface (hereinafter, referred to as a "first end surface") σ1 of the multi-core fiber MF viewed in a direction of a sight line E1. (c) is a front view of the other end surface (hereinafter, referred to as a "second end surface") σ2 of the multi-core fiber MF viewed in a direction of a sight line E2. (d) is a perspective view of the multi-core fiber MF which is in a state where a first end surface σ1 and a second end surface σ2 abut on each other.

The multi-core fiber MF in accordance with the first embodiment includes four cores a1 to a4. In contrast, the multi-core fiber MF in accordance with the second embodiment includes eight cores a1 to a8.

Similarly to the multi-core fiber MF in accordance with the first embodiment, a first point to be specially mentioned regarding the multi-core fiber MF in accordance with the second embodiment is that, in the first end surface σ1, the core a1 closest to the marker c and the core a2 second closest to the marker c are arranged so as to sandwich the virtual axis L1 therebetween. Thus, the marker c is disposed near the virtual axis L1. This makes it easy to observe the marker c together with the cores a1 to an, in a case where the first end surface σ1 of the multi-core fiber MF is observed from the front with use of a microscope or the like. This is because that, in a case where a focus of an objective lens is set on the virtual axis L1 or a position near the virtual axis L2 in order to reduce a difference in the degree of defocus particularly in the inclination direction of the cores a1 to an, the above arrangement can reduce defocus of the marker c.

Particularly, the multi-core fiber MF shown in Fig. 3 is configured such that, in the first end surface σ1, the marker c is disposed in an area sandwiched between (i) a straight line P which passes through a center of the core a1 closest to the marker c and which is in parallel with the virtual axis L1 and (ii) a straight line Q which passes through a center of the core a2 second closest to the marker c and which is in parallel with the virtual axis L1. Thus, the marker c is disposed even nearer the virtual axis L1. This makes it even easier to observe the marker c together with the cores a1 to an, in a case where the first end surface σ1 of the multi-core fiber MF is observed from the front with use of a microscope or the like. This is because that, in a case where a focus of an objective lens is set on the virtual axis L1 or a position near the virtual axis L2 in order to reduce a difference in the degree of defocus particularly in the inclination direction of the cores a1 to an, the above arrangement can further reduce defocus of the marker c.

Similarly to the multi-core fiber MF in accordance with the first embodiment, a second point to be specially mentioned regarding the multi-core fiber MF in accordance with the second embodiment is that, in the second end surface σ2, the core a1 closest to the marker c and the core a2 second closest to the marker c are arranged so as to sandwich the virtual axis L2 therebetween. Thus, the marker c is disposed near the virtual axis L2. This makes it easy to observe the marker c together with the cores a1 to an, in a case where the second end surface σ2 of the multi-core fiber MF is observed from the front with use of a microscope or the like. This is because that, in a case where a focus of an objective lens is set on the virtual axis L2 or a position near the virtual axis L2 in order to reduce a difference in the degree of defocus particularly in the inclination direction of the cores a1 to an, the above arrangement can reduce defocus of the marker c.

Particularly, the multi-core fiber MF shown in Fig. 3 is configured such that, in the second end surface σ2, the marker c is disposed in an area sandwiched between (i) a straight line R which passes through a center of the core a1 closest to the marker c and which is in parallel with the virtual axis L2 and (ii) a straight line S which passes through a center of the core a2 second closest to the marker c and which is in parallel with the virtual axis L2. Thus, the marker c is disposed even nearer the virtual axis L2. This makes it even easier to observe the marker c together with the cores a1 to an, in a case where the second end surface σ2 of the multi-core fiber MF is observed from the front with use of a microscope or the like. This is because that, in a case where a focus of an objective lens is set on the virtual axis L2 or a position near the virtual axis L2 in order to reduce a difference in the degree of defocus particularly in the inclination direction of the cores a1 to an, the above arrangement can further reduce defocus of the marker c.

### (Variations of Multi-Core Fiber)

The following will describe, with reference to Fig. 4, variations of the multi-core fiber MF. In Fig. 4, (a) is a side view of the multi-core fiber MF. (b) is a front view of one end surface (hereinafter, referred to as a "first end surface") σ1 of the multi-core fiber MF viewed in a direction of a sight line E1. (c) is a front view of the other end surface (hereinafter, referred to as a "second end surface") σ2 of the multi-core fiber MF viewed in a direction of a sight line E2. (d) is a perspective view of the multi-core fibers MF which is in a state where a first end surface σ1 and a second end surface σ2 abut on each other.

The multi-core fiber MF shown in Fig. 3 is configured such that (1) in the first end surface σ1, the core a1 closest to the marker c and the core a2 second closest to the marker c are disposed so as to sandwich the virtual axis L1 therebetween and (2) in the second end surface σ2, the core a1 closest to the marker c and the core a2 second closest to the marker c are disposed so as to sandwich the virtual axis L2 therebetween. In contrast, the multi-core fiber MF in accordance with the present variation is configured such that (1) in the first end surface σ1, the core a1 closest to the marker c is disposed on the virtual axis L1 and (2) in the second end surface σ2, the core a1 closest to the marker c is disposed on the virtual axis L2.

Thus, in the first end surface σ1, the marker c is disposed near the virtual axis L1. This makes it easy to observe the marker c together with the cores a1 to an, in a case where the first end surface σ1 of the multi-core fiber MF is observed from the front with use of a microscope or the like. Further, in the second end surface σ2, the marker c is disposed near the virtual axis L2. This makes it easy to observe the marker c together with the cores a1 to an, in a case where the second end surface σ2 of the multi-core fiber MF is observed from the front with use of a microscope or the like.

### (Common Feature)

First, the first end surface σ1 of the multi-core fiber MF shown in (b) of Fig. 3 can be explained as below. Assume that the first end surface σ1 is divided, by the virtual axis L1, into two areas, that is, a first area (an area above the virtual axis L1 when seen in Fig. 3) and a second area (an area below the virtual axis L1 when seen in Fig. 3). Among the cores a6, a7, a8, and a1 provided in the first area, a core(s) farthest from the virtual axis L1 is/are the cores a7 and a8. Meanwhile, among the cores a2, a3, a4, and a5 provided in the second area, a core(s) farthest from the virtual axis L1 is/are the cores a3 and a4. In this state, a center of the marker c is provided in an area sandwiched between (i) a straight line which passes through the cores a7 and a8 and which is in parallel with the virtual axis L1 and (ii) a straight line which passes through the cores a3 and a4 and which is in parallel with the virtual axis L1. Thus, it can be said that the center of the marker c is formed in an area sandwiched between (i) the straight line which passes through, among the cores a6, a7, a8, and a1 provided in the first area, the cores a7 and a8 farthest from the virtual axis L1 and which is in parallel with the virtual axis L1 and (ii) the straight line which passes through, among the cores a2, a3, a4, and a5 provided in the second area, the cores a3 and a4 farthest from the virtual axis L1 and which is in parallel with the virtual axis L1. Note that the straight line which passes through the cores a7 and a8 and which is in parallel with the virtual axis L1 may be (1) a straight line which passes through, among points included in the cores a7 and a8, a point closest to the virtual axis L1, (2) a straight line which passes through centers of the cores a7 and a8, or (3) a straight line which passes through, among points included in the cores a7 and a8, a point farthest from the virtual axis L1. Similarly, the straight line which passes through the cores a3 and a4 and which is in parallel with the virtual axis L1 may be (1) a straight line which passes through, among points included in the cores a3 and a4, a point closest to the virtual axis L1, (2) a straight line which passes through centers of the cores a3 and a4, or (3) a straight line which passes through, among points included in the cores a3 and a4, a point farthest from the virtual axis L1. This also applies to the second end surface σ2 of the multi-core fiber MF shown in (c) of Fig. 3.

Further, the first end surface σ1 of the multi-core fiber MF shown in (c) of Fig. 4 can be explained as below. Assume that the first end surface σ1 is divided, by the virtual axis L1, into two areas, that is, a first area (an area above the virtual axis L1 when seen in Fig. 4) and a second area (an area below the virtual axis L1 when seen in Fig. 4). Among the cores a1, a2, a3, a4, and a5 provided in the first area, a core farthest from the virtual axis L1 is the core a3. Meanwhile, among the cores a5, a6, a7, a8, and a1 provided in the second area, a core farthest from the virtual axis L1 is the core a7. In this state, a center of the marker c is provided in an area sandwiched between (i) a straight line which passes through the core a3 and which is in parallel with the virtual axis L1 and (ii) a straight line which passes through the core a7 and which is in parallel with the virtual axis L1. Thus, it can be said that the center of the marker c is formed in an area sandwiched between (i) the straight line which passes through, among the cores a1, a2, a3, a4, and a5 provided in the first area, the core a3 farthest from the virtual axis L1 and which is in parallel with the virtual axis L1 and (ii) the straight line which passes through, among the cores a5, a6, a7, a8, and a1 provided in the second area, the core a7 farthest from the virtual axis L1 and which is in parallel with the virtual axis L1. Note that the straight line which passes through the core a3 and which is in parallel with the virtual axis L1 may be (1) a straight line which passes through, among points included in the core a3, a point closest to the virtual axis L1, (2) a straight line which passes through a center of the core a3, or (3) a straight line which passes through, among points included in the core a3, a point farthest from the virtual axis L1. Similarly, the straight line which passes through the core a7 and which is in parallel with the virtual axis L1 may be (1) a straight line which passes through, among points included in the core a7, a point closest to the virtual axis L1, (2) a straight line which passes through a center of the core a7, or (3) a straight line which passes through, among points included in the core a7, a point farthest from the virtual axis L1. This also applies to the second end surface σ2 of the multi-core fiber MF shown in (c) of Fig. 4.

As discussed above, it can be said that, similarly to the multi-core fiber MF in accordance with the first embodiment, the multi-core fiber MF in accordance with the present embodiment has the following features 1 and 2.

Feature 1: In a case where the first end surface σ1 is divided into two areas, that is, the first area and the second area by the virtual axis L1, a center of the marker c is formed in an area sandwiched between (i) a straight line which passes through, among a core(s) provided in the first area out of the cores a1 to an, a core farthest from the virtual axis L1 and which is in parallel with the virtual axis L1 and (ii) a straight line which passes through, among a core(s) provided in the second area out of the cores a1 to an, a core farthest from the virtual axis L1 and which is in parallel with the virtual axis L1.

Feature 2: In a case where the second end surface σ2 is divided into two areas, that is, the first area and the second area by the virtual axis L1, a center of the marker c is formed in an area sandwiched between (i) a straight line which passes through, among a core(s) provided in the first area out of the cores a1 to an, a core farthest from the virtual axis L1 and which is in parallel with the virtual axis L1 and (ii) a straight line which passes through, among a core(s) provided in the second area out of the cores a1 to an, a core farthest from the virtual axis L1 and which is in parallel with the virtual axis L1.

Instead of the above-described features 1 and 2, the below-described features 1' and 2' may be employed to achieve a bit larger range in which the marker c can be formed. In such a configuration, similar effects to those of the configuration having the above-described features 1 and 2 can be expected. A "mode field" of a core in the below-described features 1' and 2' refers to, with regard to an intensity distribution of light of a normal mode propagating through the core at an operation wavelength, an area on which 86.5% of photocurrent is concentrated.

Feature 1': In a case where the first end surface σ1 is divided into two areas, that is, the first area and the second area by the virtual axis L1, a center of the marker c is formed in an area sandwiched between (i) a straight line which passes through a mode field of, among a core(s) provided in the first area out of the cores a1 to an, a core farthest from the virtual axis L1 and which is in parallel with the virtual axis L1 and (ii) a straight line which passes through a mode field of, among a core(s) provided in the second area out of the cores a1 to an, a core farthest from the virtual axis L1 and which is in parallel with the virtual axis L1.

Feature 2': In a case where the second end surface σ2 is divided into two areas, that is, the first area and the second area by the virtual axis L1, a center of the marker c is formed in an area sandwiched between (i) a straight line which passes through a mode field of, among a core(s) provided in the first area out of the cores a1 to an, a core farthest from the virtual axis L1 and which is in parallel with the virtual axis L1 and (ii) a straight line which passes through a mode field of, among a core(s) provided in the second area out of the cores a1 to an, a core farthest from the virtual axis L1 and which is in parallel with the virtual axis L1.

### [Third Embodiment]

### (Configuration of Optical Device)

The following will describe, with reference to Fig. 5, a configuration of an optical device OD1 in accordance with a third embodiment of the present invention. In Fig. 5, (a) is a side view of the optical device OD1. (b) is a front view of one end surface of the optical device OD1 viewed in a direction of a sight line E1. (c) is a front view of the other end surface of the optical device OD1 viewed in a direction of a sight line E2.

The optical device OD1 includes a multi-core fiber MF and single-core connectors C1 and C2 provided to both ends of the multi-core fiber MF.

The multi-core fiber MF may be any one of the multi-core fibers MF illustrated in Figs. 1 to 4. Illustrated as the multi-core fiber MF in Fig. 5 is the multi-core fiber MF illustrated in Fig. 1.

The first single-core connector C1 is provided at one of the ends of the multi-core fiber MF. An end surface of the first single-core connector C1 is inclined so as to be flush with the first end surface σ1 of the multi-core fiber MF. Among four side surfaces of the first single-core connector C1, a side surface which lays ahead in the inclination direction v1 of the first end surface σ1 is provided with a key K1. The key K1 is, for example, a rectangular parallelepiped projection protruding from the side surface of the first single-core connector C1.

The second single-core connector C2 is provided at the other of the ends of the multi-core fiber MF. An end surface of the second single-core connector C2 is inclined so as to be flush with the second end surface σ2 of the multi-core fiber MF. Among four side surfaces of the second single-core connector C2, a side surface which lays ahead in the inclination direction v2 of the second end surface σ2 is provided with a key K2. The key K2 is, for example, a rectangular parallelepiped projection protruding from the side surface of the second single-core connector C2.

With this, for the two optical devices OD1, in a case where the first single-core connector C1 of the one optical device OD1 and the second single-core connector C2 of the other optical device OD1 are connected to each other such that the key K1 and the key K2 are positioned opposite to each other, cores a1 to an of the multi-core fibers MF included in these two optical devices OD1 can be optically coupled to each other.

The description here has dealt with the configuration in which the single-core connectors are provided to both of the ends of the multi-core fiber MF. However, the present invention is not limited to this. That is, the present invention also encompasses a configuration in which a single-core connector is provided to one end of a multi-core fiber MF. That is, the present invention also encompasses a configuration achieved by omitting, from the optical device OD1 illustrated in Fig. 5, one of the first single-core connector C1 and the second single-core connector C2. In this case, an end surface of the multi-core fiber MF which end surface is not provided with a single-core connector may or may not be inclined.

### [Fourth Embodiment]

### (Configuration of Optical Device)

The following will describe, with reference to Fig. 6, a configuration of an optical device OD2 in accordance with a fourth embodiment of the present invention. In Fig. 6, (a) is a side view of the optical device OD2. (b) is a front view of one end surface of the optical device OD2 viewed in a direction of a sight line E1. (c) is a front view of the other end surface of the optical device OD2 viewed in a direction of a sight line E2.

The optical device OD2 includes a multi-core fiber bundle MFB constituted by a plurality of multi-core fibers MF and multi-core connectors C3 and C4 provided to both ends of the multi-core fiber bundle MFB.

Each of the multi-core fibers MF constituting the multi-core fiber bundle MFB may be any one of the multi-core fibers MF shown in Figs. 1 to 4. Illustrated as each of the multi-core fibers MF constituting the multi-core fiber MFB in Fig. 6 is the multi-core fiber MF shown in Fig. 1.

The first multi-core connector C3 is provided at one end of the multi-core fiber bundle MFB. The multi-core fibers MF constituting the multi-core fiber bundle MFB are fixed to the first multi-core connector C3 such that (i) end surfaces (first end surfaces σ1 in the example shown in Fig. 6) which end surfaces are closer to the first multi-core connector C3 are all inclined in a specific inclination direction (the inclination direction v1 in the example shown in Fig. 6) and (ii) these end surfaces become flush with each other. In other words, the multi-core fibers MF constituting the multi-core fiber bundle MFB are fixed to the first multi-core connector C3 such that the above-described virtual axes L1 are arranged on the same straight line.

Further, among four side surfaces of the first multi-core connector C3, a side surface which lays ahead in the inclination direction (the inclination direction v1 in the example shown in Fig. 6) of the end surfaces (the first end surfaces σ1 shown in Fig. 6) of the multi-core fibers MF constituting the multi-core fiber bundle MFB which end surfaces are closer to the first multi-core connector C3 is provided with a key K3. The key K3 is, for example, a rectangular parallelepiped projection protruding from the side surface of the first multi-core connector C3.

The second multi-core connector C4 is provided at the other end of the multi-core fiber bundle MFB. The multi-core fibers MF constituting the multi-core fiber bundle MFB are fixed to the second multi-core connector C4 such that (i) end surfaces (second end surfaces σ2 in the example shown in Fig. 6) which end surfaces are closer to the second multi-core connector C4 are all inclined in a specific inclination direction (the inclination direction v2 in the example shown in Fig. 6) and (ii) these end surfaces become flush with each other. In other words, the multi-core fibers MF constituting the multi-core fiber bundle MFB are fixed to the second multi-core connector C4 such that the above-described virtual axes L2 are arranged on the same straight line.

Further, among four side surfaces of the second multi-core connector C4, a side surface which lays ahead in the inclination direction (the inclination direction v2 in the example shown in Fig. 6) of the end surfaces (the first end surfaces σ1 shown in Fig. 6) of the multi-core fibers MF constituting the multi-core fiber bundle MFB which end surfaces are closer to the second multi-core connector C4 is provided with a key K4. The key K4 is, for example, a rectangular parallelepiped projection protruding from the side surface of the second multi-core connector C4.

With this, for the two optical devices OD2, in a case where the first multi-core connector C3 of the one optical device OD2 and the second multi-core connector C4 of the other optical device OD2 are connected to each other such that the key K3 and the key K4 are positioned opposite to each other, cores a1 to an of the multi-core fibers MF included in these two optical devices OD2 can be optically coupled to each other.

Instead of the first multi-core connector C3, single-core connectors may be provided to respective one ends of the multi-core fibers MF so that these multi-core connectors are integrated together. In this case, these single-core connectors are integrated together such that the virtual axes L1 relating to the multi-core fibers MF constituting the multi-core fiber bundle MFB are arranged on the same straight line. Similarly, instead of the second multi-core connector C4, single-core connectors may be provided to the respective other ends of the multi-core fibers MF so that these multi-core connectors are integrated together. In this case, these single-core connectors are integrated together such that the virtual axes L2 relating to the multi-core fibers MF constituting the multi-core fiber bundle MFB are arranged on the same straight line.

The description here has dealt with the configuration in which the multi-core connectors are provided to both ends of the multi-core fiber bundle MFB. However, the present invention is not limited to this. That is, the present invention also encompasses a configuration in which a multi-core connector is provided to one end of a multi-core fiber bundle MFB. That is, the present invention also encompasses a configuration obtained by omitting, from the optical device OD2 illustrated in Fig. 6, one of the first multi-core connector C3 and the second multi-core connector C4. In this case, end surfaces of the multi-core fibers MF which end surfaces are not provided with a multi-core connector may or may not be inclined.

### (Variations of Optical Device)

The following will describe variations of the optical device OD2 with reference to Fig. 7. In Fig. 7, (a) is a front view of an optical device OD2 in accordance with a first variation. In Fig. 7, (b) is a front view of an optical device OD2 in accordance with a second variation.

In the optical device OD2 in accordance with the first variation, as shown in (a) of Fig. 7, a multi-core fiber bundle MFB includes at least two multi-core fibers MF in which cores having the same core number at least partially overlap each other as a result of subjecting, to translation and inversion, end surfaces of the at least two multi-core fibers MF which end surfaces are closer to the first multi-core connector C3. (a) of Fig. 7 illustrates that this relation is satisfied by a multi-core fiber MF which is first from the left and a multi-core fiber MF which is second from the left. With this, the at least two multi-core fibers MF can satisfy (i) a condition that the core a1 closest to the marker c and the core a2 second closest to the marker c are arranged so as to sandwich the virtual axes L1 and L2 therebetween, (ii) the core a1 closest to the marker c is disposed on the virtual axis L1, or (iii) a condition that the core a2 second closest to the marker c is disposed on the virtual axis. In the example shown in (a) of Fig. 7, a multi-core fiber MF which is first from the left and a multi-core fiber MF which is second from the left can satisfy the condition that the core a1 closest to the marker c and the core a2 second closest to the marker c are arranged so as to sandwich the virtual axes L1 and L2 therebetween. With this, in a case where the first multi-core connectors C3 are connected to each other, it is possible to cause change in the same core numbers in the above-described at least two multi-core fibers MF. In the example shown in (a) of Fig. 7, in the multi-core fiber MF which is first from the left and the multi-core fiber MF which is second from the left, the core a1 and the core a2 are connected to each other (change between the core number 1 and the core number 2 occurs), and the core a3 and the core a4 are connected to each other (change between the core number 3 and the core number 4 occurs).

Assumed as the above-described inversion can be inversion with respect to an axis which is in parallel with inclination directions of the multi-core fibers MF or inversion with respect to an axis perpendicular to the inclination directions of the multi-core fibers MF. In any of these cases, the above-described effect can be attained. Further, assumed as the above-described translation can be translation along a direction which is in parallel with the inclination direction of the end surface of the first multi-core connector C3 or translation along a direction which is perpendicular to the inclination direction of the end surface of the first multi-core connector C3. In the former case, the above-described at least two multi-core fibers MF are arranged in parallel with the inclination direction of the end surface of the first multi-core connector C3. Meanwhile, in the latter case, the above-described at least two multi-core fibers MF are arranged so as to be perpendicular to the inclination direction of the end surface of the first multi-core connector C3. In any of these cases, the above-described effect can be attained. Further, particularly in the latter case, distances between (i) a virtual axis which is perpendicular to the inclination direction of the end surface of the first multi-core connector C3 and (ii) centers of markers c in the above-described at least two multi-core fibers MF are equal to each other. As a result, in a case where the end surface of the multi-core connector C3 is observed from the front with use of a microscope or the like, setting the focus on this virtual axis makes it easy to simultaneously observe the markers c of the above-described at least two multi-core fibers MF.

Note that all the multi-core fibers MF constituting the multi-core fiber bundle MFB preferably satisfy the above-described relation of translation and inversion. This makes it possible to cause change in the same core numbers in all the multi-core fibers MF constituting the multi-core fiber bundle MFB. Particularly, in a case where the above-described translation is translation along a direction perpendicular to the inclination direction of the end surface of the first multi-core connector C3, the above configuration makes it easy to simultaneously observe the markers c of all the multi-core fibers MF constituting the multi-core fiber bundle MFB.

In the optical device OD2 in accordance with the second variation, as shown in (b) of Fig. 7, a multi-core fiber bundle MFB includes at least two multi-core fibers MF in which cores having the same core number at least partially overlap each other, as a result of subjecting, to translation and rotation, end surfaces of the at least two multi-core fibers MF which end surfaces are closer to the first multi-core connector C3. (b) of Fig. 7 illustrates that this relation is satisfied by a multi-core fiber MF which is first from the left and a multi-core fiber MF which is second from the left. With this, in a case where the first multi-core connectors C3 are connected to each other, it is possible to cause change in different core numbers in the above-described at least two multi-core fibers MF. In the example shown in (b) of Fig. 7, in the multi-core fiber MF which is first from the left, the core a1 and the core a2 are connected to each other (change between the core number 1 and the core number 2 occurs), and the core a3 and the core a4 are connected to each other (change between the core number 3 and the core number 4 occurs). Meanwhile, in the multi-core fiber MF which is second from the left, the core a1 and the core a4 are connected to each other (change between the core number 1 and the core number 4 occurs), and the core a2 and the core a3 are connected to each other (change between the core number 2 and the core number 3 occurs). This can enhance a degree of freedom in wiring carried out to construct a network with use of the optical device OD2.

In a case where arrangement of cores a1 to an in a multi-core fiber MF has n-fold symmetry, assumed as the above-described rotation can be rotation of m×360°/n (m is a natural number which is not less than 1 and not more than n-1). In the present embodiment, rotation of 180° is employed. With this, both the multi-core fibers MF can satisfy the condition that the core a1 closest to the marker c and the core a2 second closest to the marker c are arranged so as to sandwich the virtual axes L1 and L2 therebetween or the condition that the core a1 closest to the marker c is disposed on the virtual axis L1.

### [Fifth Embodiment]

The following will describe, with reference to Fig. 8, a multi-core fiber MF in accordance with a fifth embodiment of the present invention. In Fig. 8, (a) is a side view of the multi-core fiber MF, and (b) is a perspective view of the multi-core fiber MF.

The multi-core fiber MF includes a first multi-core fiber MF1 and a second multi-core fiber MF2. The first multi-core fiber MF1 and the second multi-core fiber MF2 are connected to each other (e.g., via connector connection or fusion splicing).

The first multi-core fiber MF1 is configured similarly to the multi-core fiber MF shown in Fig. 1. However, in the first multi-core fiber MF1, the first end surface σ1 essentially needs to be inclined but the second end surface σ2 does not essentially need to be inclined. Hereinafter, an end surface of the first multi-core fiber MF1 which end surface essentially needs to be inclined, that is, an end surface corresponding to the first end surface σ1 of the multi-core fiber MF shown in Fig. 1 will be called a "first end surface Σ1". The first end surface Σ1 of the first multi-core fiber MF1 is connected to the second end surface Σ2 of the second multi-core fiber MF2 (described later).

The second multi-core fiber MF2 is configured similarly to the multi-core fiber MF shown in Fig. 1. However, in the second multi-core fiber MF2, the second end surface σ2 essentially needs to be inclined but the first end surface σ1 does not essentially need to be inclined. Hereinafter, an end surface of the second multi-core fiber MF2 which end surface essentially needs to be inclined, that is, an end surface corresponding to the second end surface σ2 of the multi-core fiber MF shown in Fig. 1 will be called a "second end surface Σ2". The second end surface Σ2 of the second multi-core fiber MF2 is connected to the first end surface Σ1 of the first multi-core fiber MF1 (described above).

The inclination direction v1 of the first end surface Σ1 and the inclination direction v2 of the second end surface Σ2 are defined so as to satisfy the following condition 1.

Condition 1: In a case where the first end surface Σ1 and the second end surface Σ2 are brought into surface contact with each other so as to minimize an angle made by an extending direction of the cores a1 to an in the first end surface Σ1 and an extending direction of the cores a1 to an in the second end surface Σ2, each of the cores a1 to an in the first end surface Σ1 at least partially overlaps any of the cores a1 to an in the second end surface Σ2.

With this, in a case where the first end surface Σ1 of the first multi-core fiber MF1 and the second end surface Σ2 of the second multi-core fiber MF2 are connected to each other such that the first multi-core fiber MF1 and the second multi-core fiber MF2 are aligned in a single straight line as much as possible, the cores a1 to an in the first multi-core fiber MF1 and the cores a1 to an in the second multi-core fiber MF2 can be optically coupled to each other. Here, the expression that the first end surface Σ1 and the second end surface Σ2 are connected to each other "such that the first multi-core fiber MF1 and the second multi-core fiber MF2 are aligned in a single straight line as much as possible" means that the first end surface Σ1 and the second end surface Σ2 are connected to each other "so as to minimize the angle made by the extending direction of the cores a1 to an in the first multi-core fiber MF1 and the extending direction of the cores a1 to an in the second multi-core fiber MF2".

Note that the inclination angle θ1 of the first end surface Σ1 and the inclination angle θ2 of the second end surface Σ2 may or may not be equal to each other. The inclination angle θ1 of the first end surface Σ1 and the inclination angle θ2 of the second end surface Σ2 are preferably equivalent to each other (substantially equal to each other), more preferably equal to each other (completely equal to each other). Here, the expression that the inclination angle θ1 of the first end surface Σ1 and the inclination angle θ2 of the second end surface Σ2 are equivalent to each other (substantially equal to each other) means, for example, that a difference |θ1-θ2| is not more than 2° or not more than 0.4°.

In a case where the inclination angle θ1 of the first end surface Σ1 and the inclination angle θ2 of the second end surface Σ2 are equal to each other, a minimum value of the angle made by the extending direction of the cores a1 to an in the first end surface Σ1 and the extending direction of the cores a1 to an in the second end surface Σ2 is 0°. That is, minimizing the angle made by the extending direction of the cores a1 to an in the first end surface Σ1 and the extending direction of the cores a1 to an in the second end surface Σ2 is equivalent to making the extending direction of the cores a1 to an in the first end surface Σ1 and the extending direction of the cores a1 to an in the second end surface Σ2 coincide with each other. Therefore, the above condition 1 is equivalent to the following condition 1'.

Condition 1': In a case where the first end surface Σ1 and the second end surface Σ2 are brought into surface contact with each other so as to make the extending direction of the cores a1 to an in the first end surface Σ1 and the extending direction of the cores a1 to an in the second end surface Σ2 coincide with each other, each of the cores a1 to an in the first end surface Σ1 at least partially overlaps any of the cores a1 to an in the second end surface Σ2.

With this, in a case where the first end surface Σ1 of the first multi-core fiber MF1 and the second end surface Σ2 of the second multi-core fiber MF2 are connected to each other such that the first multi-core fiber MF1 and the second multi-core fiber MF2 are aligned in a single straight line, the cores a1 to an in the first multi-core fiber MF1 and the cores a1 to an in the second multi-core fiber MF2 can be optically coupled to each other. Here, the expression that the first end surface Σ1 and the second end surface Σ2 are connected to each other "such that the first multi-core fiber MF1 and the second multi-core fiber MF2 are aligned in a single straight line" means that the first end surface Σ1 and the second end surface Σ2 are connected to each other "so as to make the extending direction of the cores a1 to an in the first multi-core fiber MF1 and the extending direction of the cores a1 to an in the second multi-core fiber MF2 coincide with each other". Even if the inclination angle θ1 of the first end surface Σ1 and the inclination angle θ2 of the second end surface Σ2 are not precisely equal to each other, it is possible to achieve a similar effect, provided that the inclination angle θ1 of the first end surface Σ1 and the inclination angle θ2 of the second end surface Σ2 are equivalent to each other (substantially equal to each other).

According to the multi-core fiber MF of the present embodiment, it is defined that the inclination direction v1 of the first end surface Σ1 of the first multi-core fiber MF1 and the inclination direction v2 of the second end surface Σ2 of the second multi-core fiber MF2 are defined so as to satisfy, in addition to the above condition 1, the following condition 2.

Condition 2: In a case where the first end surface Σ1 and the second end surface Σ2 are brought into surface contact with each other so as to minimize the angle made by the extending direction of the cores a1 to an in the first end surface Σ1 and the extending direction of the cores a1 to an in the second end surface Σ2, cores which at least partially overlap each other have the same core number.

In the example shown in Fig. 8, pairs of cores which at least partially overlap each other are (1) a pair of the core a1 in the first end surface Σ1 and the core a1 in the second end surface Σ2, (2) a pair of the core a2 in the first end surface Σ1 and the core a2 in the second end surface Σ2, (3) a pair of the core a3 in the first end surface Σ1 and the core a3 in the second end surface Σ2, and (4) a pair of the core a4 in the first end surface Σ1 and the core a4 in the second end surface Σ2. Also in any of the four pairs, two cores constituting the pair have the same core number. That is, the connection mode illustrated in Fig. 8 can be expressed as a connection mode in which (1) the core a1 closest to the marker c in the first multi-core fiber MF1 and the core a1 closest to the marker c in the second multi-core fiber MF2 at least partially overlap each other and (2) the core a2 second closest to the marker c in the first multi-core fiber MF1 and the core a2 second closest to the marker c in the second multi-core fiber MF2 at least partially overlap each other.

With this, in a case where the first end surface Σ1 of the first multi-core fiber MF1 and the second end surface Σ2 of the second multi-core fiber MF2 are connected to each other such that the first multi-core fiber MF1 and the second multi-core fiber MF2 are aligned in a single straight line as much as possible, cores having the same core number can be optically coupled to each other.

An end of the first multi-core fiber MF1 which end is closer to the first end surface Σ1 may be provided with a first single-core connector C1, as shown in (c) of Fig. 8. Similarly, an end of the second multi-core fiber MF2 which end is closer to the second end surface Σ2 may be provided with a second single-core connector C2, as shown in (c) of Fig. 8. Configurations and the like of the first single-core connector C1 and the second single-core connector C2 are as described with reference to Fig. 5. Therefore, descriptions thereof are omitted here.

The present embodiment employs, as the first multi-core fiber MF1, the multi-core fiber having the inclination direction v1 being from a center of the first end surface Σ1 toward an intermediate point between the cores a4 and a1. However, the first multi-core fiber MF1 is not limited to this. Each of the following multi-core fibers can also be used as the first multi-core fiber MF1: (1) a multi-core fiber having an inclination direction v1 being from a center of a first end surface Σ1 toward an intermediate point between cores a1 and a2; (2) a multi-core fiber having an inclination direction v1 being from a center of a first end surface Σ1 toward an intermediate point between cores a2 and a3; and (3) a multi-core fiber having an inclination direction v1 being from a center of a first end surface Σ1 toward an intermediate point between cores a3 and a4. Further, each of the following multi-core fibers can also be used as the first multi-core fiber MF1: (1) a multi-core fiber having an inclination direction v1 being from a center of a first end surface Σ1 toward a core a1; (2) a multi-core fiber having an inclination direction v1 being from a center of a first end surface Σ1 toward a core a2; (3) a multi-core fiber having an inclination direction v1 being from a center of a first end surface Σ1 toward a core a3; and (4) a multi-core fiber having an inclination direction v1 being from a center of a first end surface Σ1 toward a core a4. This also applies to the second multi-core fiber MF2.

### [Sixth Embodiment]

The following will describe, with reference to Fig. 9, a multi-core fiber MF in accordance with a sixth embodiment of the present invention. In Fig. 9, (a) is a side view of the multi-core fiber MF, and (b) is a perspective view of the multi-core fiber MF.

The multi-core fiber MF includes a first multi-core fiber MF1 and a second multi-core fiber MF2. The first multi-core fiber MF1 and the second multi-core fiber MF2 are connected to each other (e.g., via fusion splicing).

The first multi-core fiber MF1 is configured similarly to the multi-core fiber MF shown in Fig. 1. However, in the first multi-core fiber MF1, the first end surface σ1 essentially needs to be inclined but the second end surface σ2 does not essentially needs to be inclined. An end surface of the first multi-core fiber MF1 which end surface essentially needs to be inclined, that is, an end surface corresponding to the first end surface σ1 of the multi-core fiber MF shown in Fig. 1 will be called a "first end surface Σ1".

The second multi-core fiber MF2 is configured similarly to the multi-core fiber MF shown in Fig. 1. However, in the second multi-core fiber MF2, the first end surface σ1 essentially needs to be inclined but the second end surface σ2 does not essentially need to be inclined. An end surface of the second multi-core fiber MF2 which end surface essentially needs to be inclined, that is, an end surface corresponding to the first end surface σ1 of the multi-core fiber MF shown in Fig. 1 will be called a "second end surface Σ2".

In the multi-core fiber MF in accordance with the fifth embodiment, the inclination direction v1 of the first end surface Σ1 and the inclination direction v2 of the second end surface Σ2 are defined so as to satisfy, in addition to the above condition 1, the above condition 2. In contrast to this, in the multi-core fiber MF in accordance with the sixth embodiment, the inclination direction v1 of the first end surface Σ1 and the inclination direction v2 of the second end surface Σ2 are defined so as to satisfy, in addition to the above condition 1, the following condition 3.

Condition 3: In a case where the first end surface Σ1 and the second end surface Σ2 are brought into surface contact with each other so as to minimize the angle made by the extending direction of the cores a1 to an in the first end surface Σ1 and the extending direction of the cores a1 to an in the second end surface Σ2, cores which at least partially overlap each other have different core numbers.

In the example shown in Fig. 9, pairs of cores which at least partially overlap each other are (1) a pair of the core a1 in the first end surface Σ1 and the core a2 in the second end surface Σ2, (2) a pair of the core a2 in the first end surface Σ1 and the core a1 in the second end surface Σ2, (3) a pair of the core a3 in the first end surface Σ1 and the core a4 in the second end surface Σ2, and (4) a pair of the core a4 in the first end surface Σ1 and the core a3 in the second end surface Σ2. Also in any of the four pairs, two cores constituting the pair have different core numbers. That is, the connection mode illustrated in Fig. 9 can be expressed as a connection mode in which (1) the core a1 closest to the marker c in the first multi-core fiber MF1 and the core a2 second closest to the marker c in the second multi-core fiber MF2 at least partially overlap each other and (2) the core a2 second closest to the marker c in the first multi-core fiber MF1 and the core a1 closest to the marker c in the second multi-core fiber MF2 at least partially overlap each other.

With this, in a case where the first end surface Σ1 of the first multi-core fiber MF1 and the second end surface Σ2 of the second multi-core fiber MF2 are connected to each other such that the first multi-core fiber MF1 and the second multi-core fiber MF2 are aligned in a single straight line as much as possible, cores having different core numbers can be optically coupled to each other.

An end of the first multi-core fiber MF1 which end is closer to the first end surface Σ1 may be provided with a first single-core connector C1, as shown in (c) of Fig. 9. Similarly, an end of the second multi-core fiber MF2 which end is closer to the second end surface Σ2 may be provided with a second single-core connector C2, as shown in (c) of Fig. 9. Configurations and the like of the first single-core connector C1 and the second single-core connector C2 are as described with reference to Fig. 5. Therefore, descriptions thereof are omitted here.

The present embodiment employs, as the first multi-core fiber MF1, the multi-core fiber having the inclination direction v1 being from a center of the first end surface Σ1 toward an intermediate point between the cores a4 and a1. However, the first multi-core fiber MF1 is not limited to this. Each of the following multi-core fibers can also be used as the first multi-core fiber MF1: (1) a multi-core fiber having an inclination direction v1 being from a center of a first end surface Σ1 toward an intermediate point between cores a1 and a2; (2) a multi-core fiber having an inclination direction v1 being from a center of a first end surface Σ1 toward an intermediate point between cores a2 and a3; and (3) a multi-core fiber having an inclination direction v1 being from a center of a first end surface Σ1 toward an intermediate point between cores a3 and a4. Further, each of the following multi-core fibers can also be used as the first multi-core fiber MF1: (1) a multi-core fiber having an inclination direction v1 being from a center of a first end surface Σ1 toward a core a1; (2) a multi-core fiber having an inclination direction v1 being from a center of a first end surface Σ1 toward a core a2; (3) a multi-core fiber having an inclination direction v1 being from a center of a first end surface Σ1 toward a core a3; and (4) a multi-core fiber having an inclination direction v1 being from a center of a first end surface Σ1 toward a core a4. This also applies to the second multi-core fiber MF2.

Aspects of the present invention can also be expressed as follows:
A multi-core fiber in accordance with a first aspect of the present invention employs a configuration including: a cladding; a plurality of cores formed inside the cladding; at least one marker formed inside the cladding; and an end surface inclined so as not to be orthogonal to an extending direction of the plurality of cores, in the end surface, the plurality of cores being arranged in a linearly symmetric manner with respect to a virtual axis which is orthogonal to an inclination direction of the end surface and which passes through a center of the cladding, a center of the at least one marker an area between (i) a straight line which passes through, among the plurality of cores, a core farthest from the virtual axis or an area being included in a mode field of light propagating through the core and being farthest from the virtual axis and which is in parallel with the virtual axis and (ii) a straight line which passes through a core being on a side opposite to a side of the core farthest from the virtual axis and being farthest from the virtual axis or an area being included in a mode field of light propagating through the core and being farthest from the virtual axis and which is in parallel with the virtual axis.

A multi-core fiber in accordance with a second aspect of the present invention employs, in addition to the configuration of the first aspect, a configuration in which: in the end surface, (1) among the plurality of cores, a core closest to the at least one marker and a core second closest to the at least one marker are arranged so as to sandwich the virtual axis therebetween, (2) among the plurality of cores, a core closest to the at least one marker is disposed on the virtual axis, or (3) among the plurality of cores, a core second closest to the at least one marker is disposed on the virtual axis.

A multi-core fiber in accordance with a third aspect of the present invention employs, in addition to the configuration of the second aspect, a configuration in which: in the end surface, a center of the at least one marker is disposed in an area sandwiched between (i) a straight line which passes through a center of the core closest to the at least one marker and which is in parallel with the axis and (ii) a straight line which passes through a center of the core second closest to the at least one marker and which is in parallel with the virtual axis.

A multi-core fiber in accordance with a fourth aspect of the present invention employs, in addition to the configuration of any one of the first to third aspects, a configuration in which: the virtual axis does not cross any of the plurality of cores.

A multi-core fiber in accordance with a fifth aspect of the present invention employs, in addition to the configuration of any of the first to fourth aspects, a configuration in which: the multi-core fiber further includes the other end surface inclined so as not to be orthogonal to the extending direction of the plurality of cores, wherein: in the other end surface, the plurality of cores are arranged in a linearly symmetric manner with respect to a virtual axis orthogonal to the inclination direction of the end surface; and (1) among the plurality of cores, a core closest to the at least one marker and a core second closest to the at least one marker are arranged so as to sandwich the virtual axis therebetween, or (2) among the plurality of cores, a core closest to the at least one marker is disposed on the virtual axis.

A multi-core fiber in accordance with a sixth aspect of the present invention employs a configuration including: a first multi-core fiber which is a multi-core fiber in accordance with any one of the first to fifth aspects; and a second multi-core fiber which is a multi-core fiber in accordance with any one of the first to fifth aspects, the end surface of the first multi-core fiber and the end surface of the second multi-core fiber being connected to each other such that each of the plurality of cores in the first multi-core fiber at least partially overlaps any of the plurality of cores in the second multi-core fiber.

A multi-core fiber in accordance with a seventh aspect of the present invention employs a configuration in which, in the multi-core fiber in accordance with the sixth aspect, (i) among the plurality of cores in the first multi-core fiber, a core closest to the at least one marker in the first multi-core fiber as seen in the end surface of the first multi-core fiber and (ii) among the plurality of cores in the second multi-core fiber, a core closest the at least one marker in the second multi-core fiber as seen in the end surface of the second multi-core fiber at least partially overlap each other; and (i) among the plurality of cores in the first multi-core fiber, a core second closest to the at least one marker in the first multi-core fiber as seen in the end surface of the first multi-core fiber and (ii) among the plurality of cores in the second multi-core fiber, a core second closest the at least one marker in the second multi-core fiber as seen in the end surface of the second multi-core fiber at least partially overlap each other.

A multi-core fiber in accordance with an eighth aspect of the present invention employs, in addition to the configuration of the sixth aspect, a configuration in which: (i) among the plurality of cores in the first multi-core fiber, a core closest to the at least one marker in the first multi-core fiber as seen in the end surface of the first multi-core fiber and (ii) among the plurality of cores in the second multi-core fiber, a core second closest the at least one marker in the second multi-core fiber as seen in the end surface of the second multi-core fiber at least partially overlap each other; and (i) among the plurality of cores in the first multi-core fiber, a core second closest to the at least one marker in the first multi-core fiber as seen in the end surface of the first multi-core fiber and (ii) among the plurality of cores in the second multi-core fiber, a core closest the at least one marker in the second multi-core fiber as seen in the end surface of the second multi-core fiber at least partially overlap each other.

An optical device in accordance with a ninth aspect of the present invention employs a configuration including: a multi-core fiber in accordance with any one of the first to eighth aspects; and at least one single-core connector provided to one or both of ends of the multi-core fiber.

An optical device in accordance with a tenth aspect of the present invention employs a configuration including: a multi-core fiber bundle constituted by a multi-core fiber recited in any one of the first to eighth aspects; and at least one multi-core connector or at least one single-core connector group which is integrated, the at least one multi-core connector or the at least one single-core connector group being provided to one or both of ends of the multi-core fiber bundle.

An optical device in accordance with an eleventh aspect of the present invention employs, in addition to the configuration of the tenth aspect, a configuration in which: the multi-core fiber bundle includes a plurality of multi-core fibers which are arranged such that the virtual axes are located on a same straight line in the at least one multi-core connector; or the at least one single-core connector group includes a plurality of single-core connectors arranged such that the virtual axes are located on a same straight line.

A method for manufacturing a multi-core fiber in accordance with a twelfth aspect of the present invention is a method for manyfacturing a multi-core fiber in accordance with any one of the sixth to eighth aspects, and employs a configuration including: connecting the end surface of the first multi-core fiber and the end surface of the second multi-core fiber to each other such that each of the plurality of cores in the first multi-core fiber at least partially overlaps any of the plurality of cores in the second multi-core fiber.

### [Supplementary Note]

The present invention is not limited to the embodiments, but can be altered by a skilled person in the art within the scope of the claims. The present invention also encompasses, in its technical scope, any embodiment derived by combining technical means disclosed in differing embodiments. For example, the multi-core fiber may be twisted. A multi-core fiber satisfying the condition(s) recited in the claims is encompassed in the technical scope of the present invention, independently of whether or not the multi-core fiber is twisted. Further, the connector may have any shape. For example, the technical scope of the present invention also encompasses (i) an optical device including a connector of a type that has a fiber hole to which a multi-core fiber can be inserted and fixed or (ii) an optical device including a connector of a type that as a V-groove in which a multi-core fiber can be housed and fixed. Further, the end surface of the multi-core fiber may be (i) a flat surface or (ii) a curved surface (e.g., a concaved spherical surface or a recessed spherical surface) which can be approximated by a flat surface.

The above-described multi-core fiber has been explained as having the following configuration. That is, in the end surface, the plurality of cores are arranged in a linear symmetric manner with respect to a virtual axis orthogonal to the inclination direction of the end surface, and the center of the marker is included in an area between the virtual axis and a straight line which passes through a center of, among the plurality of cores, a core farthest from the virtual axis and which is in parallel with the virtual axis. Alternatively, however, the above-described multi-core fiber may have the following configuration. That is, in the end surface, the plurality of cores are arranged in a linearly symmetric matter with respect to a virtual axis orthogonal to the inclination direction of the end surface, and the center of the marker is included in an area between (i) a straight line which passes through, among the plurality of cores, a core farthest from the virtual axis or an area being included in a mode field of light propagating through the core and being farthest from the virtual axis and which is in parallel with the virtual axis and (ii) a straight line which passes through a core being on a side opposite to a side of the core farthest from the virtual axis and being farthest from the virtual axis or an area being included in a mode field of light propagating through the core and being farthest from the virtual axis and which is in parallel with the virtual axis. Here, the above-described mode field refers to an area which is inward of an outer side of the cladding and which is defined by a mode field diameter observed when light having any wavelength from 850 nm to 1700 nm propagates through the core.

### Reference Signs List

MF: multi-core fiber
a1 to an: core
b: cladding
c: marker
σ1: first end surface
σ2: second end surface
v1, v2: inclination direction
θ1, θ2: inclination angle
OD1, OD2: optical device
C1, C2: single-core connector
C3, C4: multi-core connector

## Claims

1. A multi-core fiber comprising:
a cladding;
a plurality of cores formed inside the cladding;
at least one marker formed inside the cladding; and
an end surface inclined so as not to be orthogonal to an extending direction of the plurality of cores,
in the end surface, the plurality of cores being arranged in a linearly symmetric manner with respect to a virtual axis orthogonal to an inclination direction of the end surface,
in the end surface, a center of the at least one marker being included in an area between (i) a straight line which passes through a first core or a mode field of the first core and which is in parallel with the virtual axis and (ii) a straight line which passes through a second core or a mode field of the second core and which is in parallel with the virtual axis, where the first core is, among cores provided in a first area out of the plurality of cores, a core farthest from the virtual axis and the second core is, among cores provided in a second area out of the plurality of cores, a core farthest from the virtual axis, the first area and the second area being two areas into which the end surface is virtually divided by the virtual axis.

2. The multi-core fiber according to claim 1, wherein:
in the end surface, (1) among the plurality of cores, a core closest to the at least one marker and a core second closest to the at least one marker are arranged so as to sandwich the virtual axis therebetween, (2) among the plurality of cores, a core closest to the at least one marker is disposed on the virtual axis, or (3) among the plurality of cores, a core second closest to the at least one marker is disposed on the virtual axis.

3. The multi-core fiber according to claim 2, wherein:
in the end surface, a center of the at least one marker is disposed in an area sandwiched between (i) a straight line which passes through a center of the core closest to the at least one marker and which is in parallel with the virtual axis and (ii) a straight line which passes through a center of the core second closest to the at least one marker and which is in parallel with the virtual axis.

4. The multi-core fiber according to any one of claims 1 to 3, wherein:
the virtual axis does not cross any of the plurality of cores.

5. The multi-core fiber according to any one of claims 1 to 4, further comprising:
the other end surface inclined so as not to be orthogonal to the extending direction of the plurality of cores, wherein:
in the other end surface, the plurality of cores are arranged in a linearly symmetric manner with respect to a virtual axis orthogonal to the inclination direction of the end surface; and
(1) among the plurality of cores, a core closest to the at least one marker and a core second closest to the at least one marker are arranged so as to sandwich the virtual axis therebetween, (2) among the plurality of cores, a core closest to the at least one marker is disposed on the virtual axis, or (3) among the plurality of cores, a core second closest to the at least one marker is disposed on the virtual axis.

6. A multi-core fiber comprising:
a first multi-core fiber which is a multi-core fiber recited in any one of claims 1 to 5; and
a second multi-core fiber which is a multi-core fiber recited in any one of claims 1 to 5,
the end surface of the first multi-core fiber and the end surface of the second multi-core fiber being connected to each other such that each of the plurality of cores in the first multi-core fiber at least partially overlaps any of the plurality of cores in the second multi-core fiber.

7. The multi-core fiber according to claim 6, wherein:
(i) among the plurality of cores in the first multi-core fiber, a core closest to the at least one marker in the first multi-core fiber as seen in the end surface of the first multi-core fiber and (ii) among the plurality of cores in the second multi-core fiber, a core closest the at least one marker in the second multi-core fiber as seen in the end surface of the second multi-core fiber at least partially overlap each other; and
(i) among the plurality of cores in the first multi-core fiber, a core second closest to the at least one marker in the first multi-core fiber as seen in the end surface of the first multi-core fiber and (ii) among the plurality of cores in the second multi-core fiber, a core second closest the at least one marker in the second multi-core fiber as seen in the end surface of the second multi-core fiber at least partially overlap each other.

8. The multi-core fiber according to claim 6, wherein:
(i) among the plurality of cores in the first multi-core fiber, a core closest to the at least one marker in the first multi-core fiber as seen in the end surface of the first multi-core fiber and (ii) among the plurality of cores in the second multi-core fiber, a core second closest the at least one marker in the second multi-core fiber as seen in the end surface of the second multi-core fiber at least partially overlap each other; and
(i) among the plurality of cores in the first multi-core fiber, a core second closest to the at least one marker in the first multi-core fiber as seen in the end surface of the first multi-core fiber and (ii) among the plurality of cores in the second multi-core fiber, a core closest the at least one marker in the second multi-core fiber as seen in the end surface of the second multi-core fiber at least partially overlap each other.

9. An optical device comprising:
a multi-core fiber recited in any one of claims 1 to 8; and
at least one single-core connector provided to one or both of ends of the multi-core fiber.

10. An optical device comprising:
a multi-core fiber bundle constituted by a multi-core fiber recited in any one of claims 1 to 8; and
at least one multi-core connector or at least one single-core connector group which is integrated, the at least one multi-core connector or the at least one single-core connector group being provided to one or both of ends of the multi-core fiber bundle.

11. The optical device recited in claim 10, wherein:
the multi-core fiber bundle includes a plurality of multi-core fibers which are arranged such that the virtual axes are located on a same straight line in the at least one multi-core connector; or
the at least one single-core connector group includes a plurality of single-core connectors arranged such that the virtual axes are located on a same straight line.

12. A method for manufacturing a multi-core fiber recited in any one of claims 6 to 8, the method comprising:
connecting the end surface of the first multi-core fiber and the end surface of the second multi-core fiber to each other such that each of the plurality of cores in the first multi-core fiber at least partially overlaps any of the plurality of cores in the second multi-core fiber.
